(19)

(11) **EP 3 973 623 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **20734944.0**

(22) Anmeldetag: **26.06.2020**

(51) Internationale Patentklassifikation (IPC):
***H02K 41/03*** *(2006.01)*

(52) Gemeinsame Patentklassifikation (CPC):
**H02K 41/031; B65G 45/10; B65G 54/02;**
H02K 2201/18; H02K 2213/09

(86) Internationale Anmeldenummer:
**PCT/EP2020/068000**

(87) Internationale Veröffentlichungsnummer:
**WO 2020/260566 (30.12.2020 Gazette 2020/53)**

(54) **ANORDNUNG VON STATORMODULEN FÜR EIN PLANARANTRIEBSSYSTEM**

ASSEMBLY OF STATOR MODULES FOR A PLANAR DRIVE SYSTEM

AGENCEMENT DE MODULES DE STATOR POUR UN SYSTÈME D’ENTRAÎNEMENT PLANAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2019 DE 102019117431**
**10.07.2019 DE 102019118635**

(43) Veröffentlichungstag der Anmeldung:
**30.03.2022 Patentblatt 2022/13**

(73) Patentinhaber: **Beckhoff Automation GmbH**
**33415 Verl (DE)**

(72) Erfinder: **PRUESSMEIER, Uwe**
**32657 Lemgo (DE)**

(74) Vertreter: **Patentanwaltskanzlei WILHELM & BECK**
**Prinzenstraße 13**
**80639 München (DE)**

(56) Entgegenhaltungen:
**EP-A2- 2 779 390**
**WO-A1-2013/059934**
**DE-A1-102007 038 845**

EP 3 973 623 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Anordnung von Statormodulen für ein Planarantriebssystem sowie ein Planarantriebssystem mit einer solchen Anordnung und mindestens einem Läufer.

Diese Patentanmeldung beansprucht die Priorität der deutschen Patentanmeldungen DE 10 2019 117 431.7 vom 27. Juni 2019 und DE 10 2019 118 635.8 vom 10. Juli 2019.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

In der Druckschrift DE 10 2017 131 304 A1, ist ein Planarantriebssystem offenbart, bei dem ein Läufer über mehrere nebeneinander angeordnete Statormodule bewegt werden kann. Antriebsmagnetfelder werden mittels Leiterstreifen in den Statormodulen erzeugt und wechselwirken mit Permanentmagneten im Läufer derart, dass der Läufer schwebend über den Statormodulen gehalten beziehungsweise durch ein magnetisches Wanderfeld angetrieben werden kann. Das Wanderfeld kann dabei über Ränder der Statormodule hinweg übergehend auf ein angrenzendes Statormodul erzeugt werden. Die Statoroberflächen der Statormodule bilden dabei eine gemeinsame, ununterbrochene Bewegungsfläche.

Die Offenlegungsschrift DE 10 2007 038 845 A1 offenbart eine Anordnung von Statormodulen in einem Linearmotor, wobei Wegsensoren der Statormodule zwischen Spulenanordnungen der Statormodule angeordnet sind.

Die Offenlegungsschrift EP 2 779 390 A2 offenbart ein Antriebssystem, bei dem eine Magnetflussbrücke zwischen Statormodulen vorgesehen ist, wobei die Magnetflussbrücke zur Verbesserung eines Antriebs einer beweglichen Einheit des Antriebssystems dient.

Die Offenlegungsschrift WO 2013 / 059 934 A1 offenbart ein Planarantriebssystem.

Eine Aufgabe der vorliegenden Erfindung ist es, eine Anordnung von Statormodulen anzugeben, bei denen eine flexiblere Anordnung der Statormodule möglich ist. Ferner ist es eine Aufgabe der vorliegenden Erfindung, ein entsprechendes Planarantriebssystem bereitzustellen.

Diese Aufgaben werden durch die Anordnung von Statormodulen und das Planarantriebssystem der unabhängigen Patentansprüche gelöst. Weiterbildungen sind in den abhängigen Ansprüchen angegeben.

Eine Anordnung von Statormodulen für ein Planarantriebssystem umfasst ein erstes Statormodul und ein zweites Statormodul. Das erste Statormodul und das zweite Statormodul weisen jeweils Statorsegmente mit einer Segmentbreite auf, wobei die Statorsegmente bestrombar ausgestaltet sind. Mittels der Statorsegmente kann ein Magnetfeld zum Antreiben und/oder Halten eines Läufers des Planarantriebssystems bereitgestellt werden. Das erste Statormodul und das zweite Statormodul sind beabstandet zueinander angeordnet. Dadurch ist ein Spalt gebildet, der eine Spaltbreite aufweist. Die Spaltbreite ist kleiner oder gleich der Segmentbreite. Die Segmentbreite entspricht also der maximalen Spaltbreite. Es kann vorgesehen sein, dass die Statorsegmente jeweils sechs Leiterstreifen umfassen, die als Dreiphasensystem ausgestaltet sind und die zur Erzeugung des Magnetfelds genutzt werden können.

Dadurch ist es möglich, einen Läufer vom ersten Statormodul über den Spalt zum zweiten Statormodul zu bewegen. Ferner kann eine minimale Spaltbreite vorgesehen sein, die durch einen vorgegebenen Wert definiert ist. Die minimale Spaltbreite kann beispielsweise einen Millimeter betragen. Die minimale Spaltbreite kann alternativ einer Breite eines der Leiterstreifen entsprechen, wenn das Statormodul Leiterstreifen in den Statorsegmenten umfasst.

Im Bereich des Spalts ist zumindest ein Funktionselement angeordnet. Durch das Funktionselement werden weitere Funktionen, die über das Bewegen von Läufern hinausgehen, bereitgestellt. Dadurch wird ein variablerer Aufbau eines für die Automatisierungstechnik vorgesehenen Planarantriebssystems ermöglicht. Durch das Anordnen der Funktionselemente im Bereich des Spalts ist es möglich, die auf den Läufern angeordneten Lasten nicht nur von oberhalb einer Statoroberfläche sondern auch von unterhalb der Statoroberfläche zu beeinflussen und dadurch das Planarantriebssystem variabler zu gestalten.

Das Funktionselement

- umfasst eine bewegliche Tür; oder
- umfasst eine Lichtquelle und einen Lichtdetektor, wobei mittels der Lichtquelle und des Lichtdetektors eine Erfassung eines beweglichen Läufers und/oder ein Erkennen einer Bewegung eines Gegenstands zwischen der Lichtquelle und dem Lichtdetektor erfolgen kann; oder
- stellt einen Torluftschleier bereit; oder
- weist eine Reinigungsbürste auf, wobei die Reinigungsbürste feststehend und/oder drehbar ausgestaltet ist; oder
- umfasst eine Düse zum Applizieren eines Fluids; oder
- umfasst ein Desinfektionselement; oder
- umfasst eine Absaugvorrichtung; oder
- umfasst ein Halteelement.

Die Statormodule können beispielsweise wie in der deutschen Patentanmeldung DE 10 2017 131 304 A1 ausgestaltet sein. Die darin offenbarten Statormodule weisen vier Statorsektoren mit jeweils drei Statorsegmenten auf.

In einer Ausführungsform der Anordnung von Statormodulen ist insbesondere das erste Statormodul beweglich angeordnet. Das erste Statormodul kann derart bewegt werden, dass die Spaltbreite variabel veränderbar ist. Dies ermöglicht beispielsweise, den Spalt zu Öffnen und zu Schließen. Ebenfalls möglich wird es dadurch, einen oberhalb des ersten Statormoduls angeordneten Läufer mitsamt dem ersten Statormodul zu bewegen, beispielsweise von einem Teil der Anordnung von Statormodulen zu einem anderen Teil der Anordnung von Statormodulen.

In einer Ausführungsform der Anordnung von Statormodulen umfasst das Funktionselement die bewegliche Tür, die im Allgemeinen auch einfach als Tür bezeichnet werden kann. Die bewegliche Tür kann dabei zum Öffnen und Schließen von Teilbereichen des Planarantriebssystems eingerichtet sein. Ist die Tür geöffnet, können sich Läufer über den Spalt bewegen. Bei einer geschlossenen Tür kann die Bewegung des Läufers über den Spalt eingeschränkt oder unmöglich sein. Dadurch können Teile des Planarantriebssystems temporär vom Rest des Planarantriebssystems abgetrennt werden und so für einzelne Bearbeitungsschritte eine erhöhte Sicherung eines Läufers erzielt werden. Wird beispielsweise eine Bearbeitungsstation für eine auf einem Läufer angeordnete Last während einer Bearbeitung mittels der Tür des Funktionselements vom Rest des Planarantriebssystems abgetrennt, können Kollisionen des Läufers mit weiteren Läufern während der Bearbeitung vermieden werden, da durch die Tür solche Kollisionen verhindert oder zumindest in ihrer Anzahl reduziert werden können. Die bewegliche Tür weist eine Schließstellung und eine Öffnungsstellung, wobei die bewegliche Tür in Schließstellung teilweise innerhalb des Spaltes zwischen dem ersten Statormodul und dem zweiten Statormodul angeordnet ist. Dadurch dass die bewegliche Tür in der Schließstellung teilweise innerhalb des Spaltes angeordnet ist, wird eine mechanische Sicherung der Tür erreicht. Die Tür kann beispielsweise in ein Widerlager eingreifen und so eine Bewegung der Tür in Richtung des ersten Statormoduls beziehungsweise in Richtung des zweiten Statormoduls eingeschränkt oder unmöglich sein. Dadurch kann selbst bei einer Kollision eines weiteren Läufers mit der Tür während sich die Tür in der Schließstellung befindet, eine Bewegung der Tür in Richtung des ersten Statormoduls beziehungsweise des zweiten Statormoduls verhindert werden und so ein hinter der Tür liegender Bereich geschützt werden.

Dadurch kann die Abtrennung einer Bearbeitungsstation vom Rest des Planarantriebssystems weiter verbessert werden. Es kann ferner vorgesehen sein, dass die Anordnung von Statormodulen ein drittes Statormodul umfasst, wobei das dritte Statormodul und das erste Statormodul beabstandet zueinander angeordnet sind und dadurch ein weiterer Spalt gebildet ist. Die Bearbeitungsstation kann dann durch eine im Bereich des weiteren Spalts angeordnete weitere Tür geschützt werden, wobei während einer Bearbeitung beide Türen entsprechend in einer Schließstellung angeordnet sind und die weitere Tür in der Schließstellung teilweise im weiteren Spalt angeordnet ist. Dadurch kann eine Bearbeitungsstation ermöglicht werden, bei der ein Läufer die Bearbeitungsstation durch eine Bewegung über den Spalt erreicht und durch eine Bewegung über den weiteren Spalt wieder verlässt.

In einer Ausführungsform der Anordnung von Statormodulen kann mittels der Tür ein Gehäuse um zumindest das erste Statormodul geschlossen werden, wobei das Gehäuse gasdicht und/oder fluiddicht und/oder partikeldicht ausgeführt ist. Dies ermöglicht die Bereitstellung eines Gehäuses für eine der bereits beschriebenen Bearbeitungsstationen. Dadurch können beispielsweise während der Bearbeitung entstehende Abfälle wie beispielsweise Späne nach einem Fräsvorgang innerhalb des Gehäuses gehalten werden und mittels Absaugung oder einer anderen Vorrichtung aus dem Gehäuse entfernt werden, bevor die Tür wieder geöffnet wird. Dadurch kann eine Verschmutzung des restlichen Planarantriebssystems reduziert oder gänzlich vermieden werden.

In einer Ausführungsform der Anordnung von Statormodulen weist das Gehäuse eine weitere bewegliche Tür auf, wobei die Anordnung von Statormodulen ein drittes Statormodul umfasst, wobei das dritte Statormodul und das erste Statormodul beabstandet zueinander angeordnet sind und dadurch ein weiterer Spalt gebildet ist, wobei die weitere bewegliche Tür eine Schließstellung und eine Öffnungsstellung aufweist, wobei die weitere bewegliche Tür in Schließstellung teilweise innerhalb des weiteren Spaltes zwischen dem ersten Statormodul und dem dritten Statormodul angeordnet ist.

Dadurch kann einerseits eine Bearbeitungsstation ermöglicht werden, bei der ein Läufer die Bearbeitungsstation durch eine Bewegung über den Spalt erreicht und durch eine Bewegung über den weiteren Spalt wieder verlässt. Andererseits kann das Gehäuse mit der Tür und der weiteren Tür auch als Schleuse für das Planarantriebssystem dienen, beispielsweise um Läufer in einen Reinraumbereich einzuschleusen oder wieder aus dem Reinraumbereich auszuschleusen. Ferner kann das Gehäuse mit der Tür und der weiteren Tür als Vakuumschleuse dienen, wenn das zweite Statormodul oder das dritte Statormodul ein einer Vakuumkammer angeordnet ist und das Gehäuse ferner ein Evakuierungsmittel für das Gehäuseinnere aufweist.

In einer Ausführungsform der Anordnung von Statormodulen umfasst das Funktionselement die Lichtquelle und den Lichtdetektor. Mittels der Lichtquelle und des Lichtdetektors kann eine Erfassung eines beweglichen Läufers und/oder ein Erkennen einer Bewegung eines Gegenstands zwischen der Lichtquelle und dem Lichtdetektor erfolgen. Die Lichtquelle und der Lichtdetektor können also einerseits als Lichtschranke dienen, um Bewegungen von Gegenständen im Bereich des Spalts zu erkennen. Dies kann beispielsweise im Rahmen einer Eingriffssicherung verwendet werden, um Personenschäden aufgrund von unbefugten Eingriffen in bestimmte Bereiche des Planarantriebssystems zu erkennen und entsprechende Maßnahmen wie beispielsweise ein Abschalten des Planarantriebssystems oder von Bearbeitungsstationen zu ergreifen.

Alternativ können Lichtquelle und Lichtdetektor auch zum Auslesen von optischen Codes, beispielsweise Barcodes oder QR-Codes auf einem Läufer oder auf einem auf einem Läufer angeordneten Werkstück dienen. Dadurch können Ortsinformationen über bestimmte Läufer oder über bestimmte Werkstücke bereitgestellt werden, anhand derer ein Steuern des Planarantriebssystems erfolgen kann.

In einer Ausführungsform der Anordnung von Statormodulen stellt das Funktionselement den Torluftschleier bereit. Ein Torluftschleier ist eine Anlage, die mittels Gebläse unterschiedlich konditionierte Luftmassen durch eine Barriere aus strömender Luft voneinander trennt und so deren Austausch verhindert. Die Barriere besteht aus einer gerichteten Luftströmung, die in Art einer Luftwalze zwischen Ausblasöffnung und Ansaugöffnung des Gerätes zirkuliert. Torluftschleier können auch als Luftschleier, Türluftschleier, Torluftschleieranlage, Luftschleieranlage, Lufttür, Luftvorhang, Luftwand oder Luftschottanlage bezeichnet werden. Dadurch kann beispielsweise ein Temperaturausgleich zwischen verschiedenen Teilbereichen eines Planarantriebssystems verringert oder vermieden werden oder eine Trennung von Luftmassen, die unterschiedliche Gase enthalten, erreicht werden.

In einer Ausführungsform der Anordnung von Statormodulen weist das Funktionselement die Reinigungsbürste auf, wobei die Reinigungsbürste feststehend und/oder drehbar ausgestaltet ist. Die Reinigungsbürste kann dabei innerhalb des Spalts angeordnet sein und zur Reinigung einer Unterseite eines Läufers dienen. Die Reinigungsbürste kann feststehende und drehbare Teilbereiche umfassen und innerhalb des Spalts beweglich sein derart, dass die Reinigungsbürste beispielsweise senkrecht zu einer Statoroberfläche der Statormodule bewegt werden kann.

In einer Ausführungsform der Anordnung von Statormodulen umfasst das Funktionselement eine Düse zum Applizieren eines Fluids. Das Fluid kann ein Gas oder eine Flüssigkeit sein. Beispielsweise ist das Fluid eine Reinigungsflüssigkeit, mit der eine Läuferunterseite gereinigt werden kann. Alternativ kann das Fluid auch Druckluft sein, mit der ein Läufer von grobem Schmutz befreit werden kann. Alternativ kann die Düse vorgesehen sein, ein Fluid in einem an oder auf dem Läufer angeordneten Vorratsbehälter zu fördern, so dass das Fluid mittels des Läufers und der Statormodule an eine beliebige andere Stelle des Planarantriebssystems transportiert werden kann.

In einer Ausführungsform der Anordnung von Statormodulen umfasst wobei das Funktionselement das Desinfektionselement. Das Desinfektionselement kann dabei eine Düse zum Aufsprühen eines Desinfektionsmittels umfassen. Alternativ kann das Desinfektionselement eine elektromagnetische Strahlung, beispielsweise UV-Licht, bereitstellen. Das Desinfektionselement kann dabei auf eine Unterseite und/oder eine Oberseite eines Läufers eines Planarantriebssystems einwirken.

In einer Ausführungsform der Anordnung von Statormodulen umfasst das Funktionselement die Absaugvorrichtung. Mittels der Absaugvorrichtung kann Schmutz von einer Statoroberfläche abgesaugt werden. Zusätzlich kann vorgesehen sein, dass mindestens ein Läufer ein Räumschild aufweist, mit dem der Schmutz in Richtung der Absaugvorrichtung bewegt werden kann. Für diese Ausführungsform ist eine bewegliche Anordnung des ersten Statorelements besonders vorteilhaft, da dann die Absaugvorrichtung unter dem ersten Statormodul angeordnet sein kann und der Spalt geöffnet werden kann, wenn die Absaugvorrichtung in Betrieb genommen werden soll.

In einer Ausführungsform der Anordnung von Statormodulen umfasst das Funktionselement das Halteelement. Das Halteelement kann eingerichtet sein, den Läufer während einer Bearbeitung eines auf dem Läufer angeordneten Werkstücks in einer Position zu fixieren. Dabei kann einerseits eine horizontale Verschiebung des Läufers parallel zu einer Statoroberfläche und/oder eine vertikale Verschiebung des Läufers senkrecht zur Statoroberfläche reduziert oder verhindert werden. Ferner kann eine Drehung des Läufers um eine Achse senkrecht zur Statoroberfläche durch das Halteelement verhindert werden.

Die Erfindung umfasst ferner ein Planarantriebssystem mit einer Anordnung von Statormodulen, umfassend ein erstes Statormodul und ein zweites Statormodul, und mindestens einem Läufer. Der Läufer weist eine Mehrzahl von in eine Antriebsrichtung des Läufers wirksamen und in der Antriebsrichtung nebeneinander angeordneten Magnetanordnungen zum Antreiben und/oder Halten des Läufers mit jeweils einer Magnetisierungsperiodenbreite auf. Das erste Statormodul und/oder das zweite Statormodul weisen jeweils Statorsegmente mit einer Segmentbreite auf, wobei die Statorsegmente bestrombar ausgestaltet sind. Mittels der Statorsegmente kann ein Magnetfeld zum Wechselwirken mit den Magnetanordnungen des Läufers zum Antreiben und/oder Halten des Läufers des Planarantriebssystems bereitgestellt werden. Das erste Statormodul und das zweite Statormodul sind beabstandet zueinander angeordnet, wobei dadurch ein Spalt gebildet ist. Der Spalt weist eine Spaltbreite von maximal der Hälfte der Anzahl der in eine Antriebsrichtung des Läufers wirksamen Magnetanordnungen multipliziert mit der Magnetisierungsperiodenbreite auf. Im Bereich des Spalts ist mindestens ein Funktionselement angeordnet, wobei durch das Funktionselement weitere Funktionen, die über das Bewegen von Läufern hinausgehen, bereitgestellt werden.

Das Funktionselement

- umfasst eine bewegliche Tür; oder
- umfasst eine Lichtquelle und einen Lichtdetektor, wobei mittels der Lichtquelle und des Lichtdetektors eine Erfassung eines beweglichen Läufers und/oder ein Erkennen einer Bewegung eines Gegenstands zwischen der Lichtquelle und dem Lichtdetektor erfolgen kann; oder
- stellt einen Torluftschleier bereit; oder
- weist eine Reinigungsbürste auf, wobei die Reinigungsbürste feststehend und/oder drehbar ausgestaltet ist; oder
- umfasst eine Düse zum Applizieren eines Fluids; oder
- umfasst ein Desinfektionselement; oder
- umfasst eine Absaugvorrichtung; oder
- umfasst ein Halteelement.

In einer Ausführungsform des Planarantriebssystems entspricht die Magnetisierungsperiodenbreite der Segmentbreite.

In einer Ausführungsform des Planarantriebssystems weist der Läufer zwei in die Antriebsrichtung des Läufers wirksamen und in der Antriebsrichtung nebeneinander angeordneten Magnetanordnungen auf. Dadurch ergibt sich, dass die maximale Spaltbreite der Magnetisierungsperiodenbreite entspricht.

Die Erfindung wird nachfolgend anhand von Ausführungsbeispielen und unter Bezugnahme auf Figuren näher erläutert. Dabei zeigen jeweils in schematischer Darstellung

Fig. 1 eine isometrische Ansicht einer Anordnung von Statormodulen in einem Planarantriebssystem;

Fig. 2 eine isometrische Ansicht eines Läufers;

Fig. 3 einen Querschnitt durch zwei Statormodule und einen Läufer;

Fig. 4 einen Querschnitt durch eine Anordnung von Statormodulen mit einem Gehäuse und einer geöffneten Tür;

Fig. 5 einen Querschnitt durch eine Anordnung von Statormodulen mit einem Gehäuse und einer geschlossenen Tür;

Fig. 6 einen Querschnitt durch eine Anordnung von Statormodulen als Schleuse;

Fig. 7 einen Querschnitt durch eine weitere Anordnung von Statormodulen mit einem Gehäuse und einer geöffneten Tür;

Fig. 8 einen Querschnitt durch eine weitere Anordnung von Statormodulen mit einem Gehäuse und einer geschlossenen Tür;

Fig. 9 eine Seitenansicht einer Anordnung von Statormodulen mit einer geöffneten Tür;

Fig. 10 eine Seitenansicht einer weiteren Anordnung von Statormodulen mit einer geschlossenen Tür;

Fig. 11 eine Seitenansicht einer Anordnung von Statormodulen mit einer Reinigungsbürste;

Fig. 12 eine Seitenansicht einer Anordnung von Statormodulen mit einer Düse zum Applizieren eines Fluids;

Fig. 13 eine Seitenansicht einer Anordnung von Statormodulen mit einer Lichtquelle;

Fig. 14 eine Seitenansicht einer Anordnung von Statormodulen mit einem Auffangbehälter;

Fig. 15 eine Seitenansicht einer Anordnung von Statormodulen mit einer Absaugevorrichtung;

Fig. 16 eine Seitenansicht einer Anordnung von Statormodulen mit einem Verschluss;

Fig. 17 eine Seitenansicht einer Anordnung von Statormodulen mit einem Halteelement;

Fig. 18 eine Seitenansicht der Anordnung von Statormodulen mit dem Halteelement eingreifend in einen Läufer;

Fig. 19 eine vergrößerte Darstellung des Eingriffs zwischen Halteelement und Läufer der Fig. 18;

Fig. 20 eine Seitenansicht einer Anordnung von Statormodulen mit einem Betankungselement;

Fig. 21 eine Seitenansicht einer Anordnung von Statormodulen mit einer veränderlichen Spaltbreite;

Fig. 22 eine Seitenansicht einer Anordnung von Statormodulen mit einer Absaugevorrichtung und veränderlicher Spaltbreite; und

Fig. 23 eine Seitenansicht einer Anordnung von Statormodulen mit einer veränderlichen Spaltbreite zur Nutzung als Fähre.

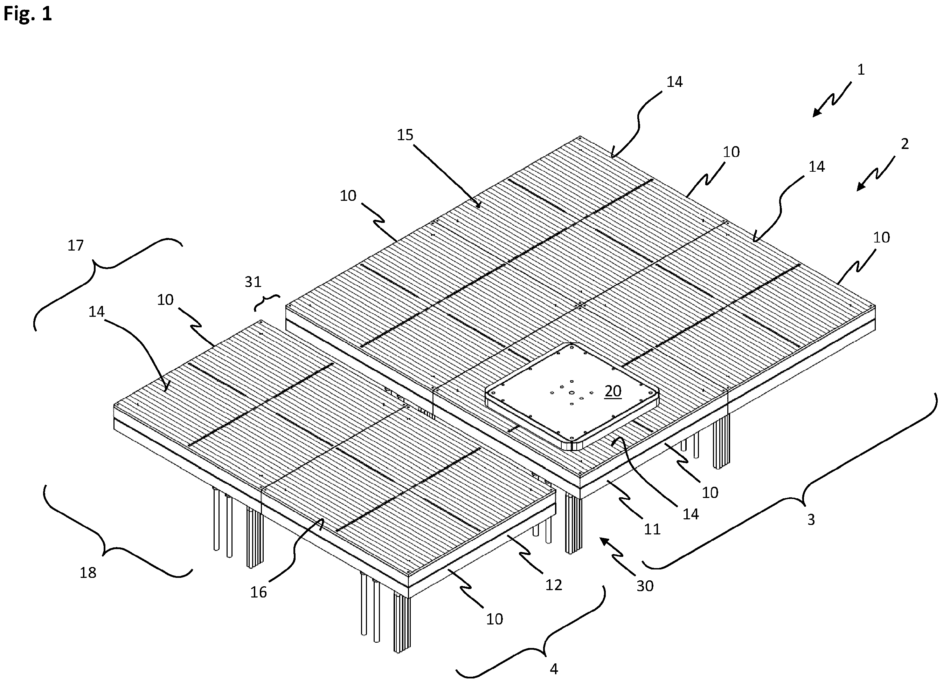

Fig. 1 zeigt eine isometrische Ansicht eines Planarantriebssystems 1 bestehend aus einer Anordnung 2 von Statormodulen 10 und einem Läufer 20. Die Statormodule 10 können dabei jeweils wie in der deutschen Patentanmeldung DE 10 2017 131 304 A1 beschrieben ausgestaltet sein. Insbesondere können die Statormodule 10 die in der genannten Patentanmeldung beschriebenen Leiterstreifen zur Erzeugung von Magnetfeldern und/oder magnetischen Wanderfeldern aufweisen. Die Magnetfelder können dabei dazu genutzt werden, den Läufer 20 beabstandet zu den Statormodulen 10 in einer Vertikal-Position zu halten und mittels des Wanderfelds in einer horizontalen Richtung zu bewegen. Die Ausbildung des Planarantriebssystems 1 ist jedoch nicht auf eine horizontale Ausrichtung bzw. Ausdehnung der Statormodule 10 und einem Halten des Läufers 20 in einer Vertikal-Position, bzw. einer Bewegung des Läufers 20 in einer horizontalen Richtung beschränkt. Ebenso können die Statormodule 10 in einer vertikalen Richtung oder einer beliebigen anderen Richtung ausgerichtet bzw. ausgedehnt sein und der Läufer 20 bewegt sich dann analog ausgerichtet annähernd parallel zu einer Statoroberfläche 14 bzw. wir annähernd parallel beabstandet zu der Statoroberfläche 14 gehalten. Ferner kann es vorgesehen sein, dass das Planarantriebssystem 1 mehr als einen Läufer 20 enthält, in Fig. 1 ist jedoch nur ein Läufer 20 dargestellt. Das Planarantriebssystem 1 ist in einen ersten Bereich 3 und einen zweiten Bereich 4 unterteilt. Im ersten Bereich 3 weist das Planarantriebssystem 1 vier Statormodule 10 auf. Im zweiten Bereich 4 weist das Planarantriebssystem 1 zwei Statormodule 10 auf. Zwischen dem ersten Bereich 3 und dem zweiten Bereich 4 ist ein Spalt 30 angeordnet.

Die Statormodule 10 weisen jeweils eine Statoroberfläche 14 auf. Der Läufer 20 kann oberhalb der Statoroberflächen 14 bewegt werden. Die Statoroberflächen 14 bilden im ersten Bereich 3 und im zweiten Bereich 4 jeweils eine durchgehende Bewegungsfläche, im ersten Bereich 3 eine erste Bewegungsfläche 15, im zweiten Bereich 4 eine zweite Bewegungsfläche 16. Im Bereich des Spalts 30 ist keine Statoroberfläche 14 angeordnet, da im Bereich des Spalts 30 die Statormodule 10 beabstandet zueinander angeordnet sind und dadurch die zu den Statormodulen 10 im ersten Bereich 3 zugehörigen Statoroberflächen 14 der ersten Bewegungsfläche 15 und die zu den Statormodulen 10 im zweiten Bereich 4 zugehörigen Statoroberflächen 13 der zweiten Bewegungsfläche 16 durch den Spalt 30 ebenfalls voneinander beabstandet sind. Die erste Bewegungsfläche 15 ist also durch den Spalt 30 von der zweiten Bewegungsfläche 16 getrennt.

Die Statormodule 10 können mittels Kommunikationsverbindungen mit einer Steuereinheit verbunden sein. Die Steuereinheit kann dabei eingerichtet sein, Steuerbefehle an die Statormodule auszugeben. Dazu kann die Steuereinheit Kommunikationsmittel aufweisen, die beispielsweise als Kommunikationsschnittstelle ausgestaltet sind. Die Steuereinheit kann eine Recheneinheit aufweisen. Anhand der Steuerbefehle können ausgewählte Leiterstreifen der Statormodule 10 bestromt werden, wobei anhand der Steuerbefehle auch eine Stromstärke und/oder Ausgangsleistung beeinflusst werden und so eine Magnetfeldstärke eingestellt werden kann. Die Steuerbefehle können dabei von der Recheneinheit erzeugt werden. Insbesondere kann die Recheneinheit dabei Zugriff auf ein in einem lesbaren Speicher gespeichertes Computerprogramm haben, wobei der Speicher eine Festplatte, eine CD, eine DVD, einen USB-Stick oder ein anderes Speichermedium umfassen kann.

Der Läufer 20 ist dabei über einem ersten Statormodul 11 angeordnet. Das erste Statormodul 11 grenzt mit einer seiner Außenkanten an den Spalt 30 an. Auf einer dem Spalt 30 gegenüberliegenden Seite ist ein zweites Statormodul 12 angeordnet. Das erste Statormodul 11 ist also der ersten Bewegungsfläche 15 zugeordnet, das zweite Statormodul 12 ist der zweiten Bewegungsfläche 16 zugeordnet. Der Läufer 20 kann vom ersten Statormodul 11 zum zweiten Statormodul 12 bewegt werden, wobei der Läufer 20 aufgrund dieser Bewegung den Spalt 30 überquert und somit von der ersten Bewegungsfläche 15 zur zweiten Bewegungsfläche 16 gelangt. Die Statormodule 10 weisen eine identische Größe auf und sind quadratisch. Alternative, nicht gezeigte Ausführungsbeispiele der Statormodule können auch eine rechteckige Form oder eine beliebige andere Form wie fünf- oder sechseckig, gebogen oder auch kreisrund aufweisen. Die Statormodule 10 weisen eine erste Ausdehnung 17 und eine zweite Ausdehnung 18 auf. Aufgrund der quadratischen Form sind die erste Ausdehnung 17 und die zweite Ausdehnung 18 identisch, sind die Statormodule rechteckig ausgeführt, so kann es vorgesehen sein, dass die zweite Ausdehnung größer als die erste Ausdehnung ist.

Der Spalt 30 weist eine Spaltbreite 31 auf, die einem Abstand zwischen dem ersten Statormodul 11 und dem zweiten Statormodul 12 entspricht. Es kann vorgesehen sein, dass die Spaltbreite 31 einen maximalen Wert annimmt. Dieser Wert der Spaltbreite 31 kann maximal zwanzig Prozent der ersten Ausdehnung 17 betragen.

Durch den maximalen Wert der Spaltbreite 31 von zwanzig Prozent der ersten Ausdehnung 17 ist es möglich, den Läufer 20 vom ersten Statormodul 11 über den Spalt 30 zum zweiten Statormodul 12 zu bewegen. Ferner kann ein minimaler Wert der Spaltbreite 31 vorgesehen sein, der entweder ebenfalls anhand der ersten Ausdehnung 17 oder durch einen vorgegebenen Wert definiert ist. Der minimale Wert der Spaltbreite 31 kann beispielsweise zweieinhalb Prozent der ersten Ausdehnung 17 betragen. Alternativ kann der minimale Wert der Spaltbreite 31 beispielsweise einen Millimeter betragen.

Es kann vorgesehen sein, den maximalen Wert der Spaltbreite 31 anhand von Abmessungen von im ersten Statormodul 11 beziehungsweise im zweiten Statormodul 12 verbauten Bauteilen zu ermitteln. Das erste Statormodul 11 beziehungsweise das zweite Statormodul 12 können beispielsweise wie in der deutschen Patentanmeldung DE 10 2017 131 304.4 vom 27. Dezember 2017 ausgestaltet sein. Die darin offenbarten Statormodule weisen vier Statorsektoren mit jeweils drei Statorsegmenten 93 auf.

In einem Ausführungsbeispiel der Anordnung 2 von Statormodulen 10 weisen das erste Statormodul 11 und das zweite Statormodul 12 jeweils Statorsegmente 93 mit einer Segmentbreite 95 auf, wobei die Statorsegmente bestrombar ausgestaltet sind. Mittels der Statorsegmente 93 kann ein Magnetfeld zum Antreiben und/oder Halten eines Läufers 20 des Planarantriebssystems 1 bereitgestellt werden. Die Spaltbreite 31 ist kleiner oder gleich der Segmentbreite 95. Die Segmentbreite 95 entspricht also maximal dem maximalen Wert der Spaltbreite 31. Es kann vorgesehen sein, dass die Statorsegmente 93 jeweils sechs Leiterstreifen 96 umfassen, die als Dreiphasensystem ausgestaltet sind und die zur Erzeugung des Magnetfelds genutzt werden können wie in der deutschen Patentanmeldung DE 10 2017 131 304.4 vom 27. Dezember 2017 beschrieben. Der minimale Wert der Spaltbreite 31 kann dann einer Breite eines der Leiterstreifen entsprechen.

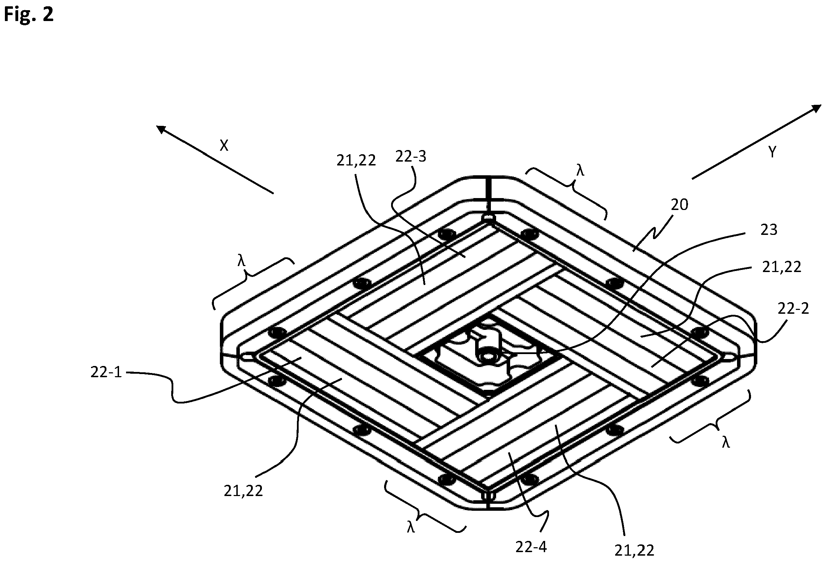

Fig. 2 zeigt eine isometrische Ansicht eines Läufers 20 von unten. Der Läufer 20 weist beispielhaft vier Magneteinheiten 21 auf. Die vier Magneteinheiten 21 weisen jeweils eine aus mehreren Einzelmagneten bestehende Magnetanordnung 22 auf, die hier zur besseren Unterscheidung mit einer zusätzlichen Kennung versehen sind. So gibt es eine erste Magnetanordnung 22-1, eine zweite Magnetanordnung 22-2, eine dritte Magnetanordnung 22-3 und eine dritte Magnetanordnung 22-4. Die erste Magnetanordnung 22-1 und die zweite Magnetanordnung 22-2 sind in der zweiten Antriebsrichtung Y nebeneinander angeordnet und sind für einen Antrieb des Läufers 20 in die zweite Antriebsrichtung Y wirksam. Die dritte Magnetanordnung 22-3 und die vierte Magnetanordnung 22-4 sind in der ersten Antriebsrichtung X nebeneinander angeordnet und sind für einen Antrieb des Läufers 20 in die erste Antriebsrichtung X wirksam. Nebeneinander angeordnet bedeutet in diesem Zusammenhang, dass die in der ersten Bewegungsrichtung X wirksamen dritten und vierten Magnetanordnungen 22-3 und 22-4 direkt aneinander anschließend oder beabstandet zueinander entlang der ersten Bewegungsrichtung X angeordnet sind. Nebeneinander angeordnet bedeutet in diesem Zusammenhang ebenfalls, dass die in der zweiten Bewegungsrichtung Y wirksamen ersten und zweiten Magnetanordnungen 22-1 und 22-2 direkt aneinander anschließend oder beabstandet zueinander entlang der zweiten Bewegungsrichtung Y angeordnet sind. Die ersten bis vierten Magnetanordnungen 22-1 bis 22-4 weisen jeweils Magnetisierungsperiodenbreite $\lambda$ auf. Die Magnetisierungsperiodenbreite $\lambda$ kann der bereits erwähnten Segmentbreite entsprechen. Die Magneteinheiten 21 sind ringförmig angeordnet. In der Mitte der Anordnung der Magneteinheiten 21 ist eine Aufnahme 23 angeordnet, mit der der Läufer 20 mechanisch beeinflusst werden kann. Hinsichtlich des Läufers 20 und der Magneteinheiten 21 und den zugehörigen Abmessungen wird ebenfalls der Inhalt der deutschen Patentanmeldung DE 10 2017 131 304.4 vom 27. Dezember 2017 ausdrücklich in diese Anmeldung aufgenommen.

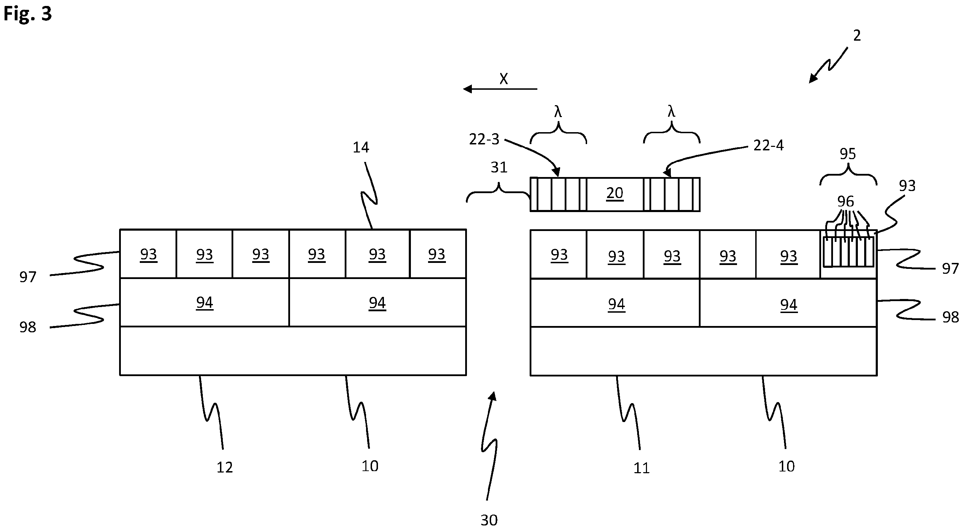

Fig. 3 zeigt einen schematischen Querschnitt durch eine Anordnung 2 eines ersten Statormoduls 11, eines zweiten Statormoduls 12 und eines Läufers 20. Das erste Statormodul 11 und das zweite Statormodul 12 weisen eine erste Statorlage 97 und eine zweite Statorlage 98 auf, die rechtwinklig übereinanderliegen wie in der deutschen Patentanmeldung DE 10 2017 131 304.4 vom 27. Dezember 2017 beschrieben. In der ersten Statorlage 97 sind dabei Statorsegmente 93 angeordnet, die jeweils eine Segmentbreite 95 aufweisen, wobei die Segmentbreite 95 einer Magnetisierungsperiodenbreite $\lambda$ einer Magnetanordnung 22 des Läufers 20 entsprechen kann. In der zweiten Statorlage 98 sind weitere Statorsegmente 94 angeordnet. Innerhalb eines Statormoduls 10 sind jeweils sechs Statorsegmente 93 und jeweils sechs dazu senkrechte weitere Statorsegmente 94 angeordnet, wobei die weiteren Statorsegmente 94 die zweite Statorlage 98 bilden. Aufgrund der Querschnittsdarstellung der Fig. 3 sind nur zwei der weiteren Statorsegmente 94 sichtbar. Jeweils drei Statorsegmente 93 und drei zu den Statorsegmenten 93 senkrecht angeordnete weitere Statorsegmente 94 bilden einen Statorsektor, wobei das Statormodul vier Statorsektoren aufweist. Die in Fig. 3 sichtbaren Statorsegmente 93 und weiteren Statorsegmente 94 gehören insgesamt zwei Statorsektoren an. Insgesamt weisen die Statormodule 10 also jeweils zwölf Statorsegmente 93 und zwölf weitere Statorsegmente 94 auf. Innerhalb der Statorsegmente 93 beziehungsweise der weiteren Statorsegmente 94 kann jeweils ein Dreiphasensystem mit sechs Leiterstreifen wie in der deutschen Patentanmeldung DE 10 2017 131 304 A1 beschrieben angeordnet sein und zur Erzeugung eines Magnetfelds dienen. In einem der Statorsegmente 93 des ersten Statormoduls 11 sind exemplarisch sechs bestrombare Leiterstreifen 96 dargestellt, auch die anderen Statorsegmente 93 und die weiteren Statorsegmente 94 des ersten Statormoduls 11 beziehungsweise des zweiten Statormoduls 12 können entsprechend ausgestaltet sein. Die Leiterstreifen 96 der ersten Statorlage 97 sind in der dargestellten Ausführungsform in ihrer Längsausdehnung quer zu ersten Antriebsrichtung X ausgebildet. Ebenfalls quer zur ersten Antriebsrichtung X sind in ihrer Längsausdehnung die dritte Magnetanordnung 22-3 und die vierte Magnetanordnung 22-4 des Läufers 20 ausbildet. Somit können bei einer entsprechenden Bestromung der Leiterstreifen 96 der ersten Statorlage 97 die dritte Magnetanordnung 22-3 und die vierte Magnetanordnung 22-4 des Läufers 20 mittels des durch die Bestromung erzeugten Magnetfeldes wechselwirken und sind wirksam für einen Antrieb des Läufers 20 in der ersten Bewegungsrichtung X nutzbar.

Der Spalt 30 weist eine Spaltbreite 31 auf. Eine maximale Spaltbreite 31 kann der Segmentbreite 95 entsprechen. Alternativ kann die maximale Spaltbreite 31 auch auf Abmessungen des Läufers bezogen sein. Da in dem gezeigten Beispiel der Fig. 2 und 3 zwei Magnetanordnungen 22, die dritte und die vierte Magnetanordnung 22-3 und 22-4 wirksam für den Antrieb des Läufers 20 in der ersten Antriebsrichtung X nutzbar sind, entspricht die maximale Spaltbreite in diesem Fall der Hälfte von Zwei multipliziert mit der Magnetisierungsperiodenbreite $\lambda$. Also ist die maximale Spaltbreite 31 in dem hier gezeigten Ausführungsbeispiel:

$$\text{Max. Spaltbreite} = (2/2) * \lambda = \lambda$$

Kleinere Spaltbreiten 31 sind jedoch ebenfalls möglich. Eine minimale Spaltbreite kann einen Millimeter betragen oder einem minimalen vorgegebenen Bruchteil der Magnetisierungsperiodenbreite $\lambda$ entsprechen, beispielsweise zehn Prozent der Magnetisierungsperiodenbreite $\lambda$. Ferner kann die minimale Spaltbreite der Breite eines der Leiterstreifen 96 entsprechen. Ferner kann vorgesehen sein, dass Planarantriebssystem derart auszubilden, dass die Magnetisierungsperiodenbreite $\lambda$ und die Segmentbreite 95 übereinstimmen. In diesem Fall kann es vorgesehen sein, dass der Läufer 20, wie in Fig. 3 gezeigt, zwei Magnetanordnungen 22 wirksam zum Antrieb in die Antriebsrichtung X aufweist. Dann entspricht die maximale Spaltbreite 31 sowohl der Magnetisierungsperiodenbreite $\lambda$ als auch der Segmentbreite 95.

In einem alternativen, nicht gezeigten Ausführungsbeispiel kann der Läufer 20 auch mehr als zwei Magnetanordnungen 22 wirksam zum Antrieb in die Antriebsrichtung X aufweisen, beispielsweise vier oder sechs Magnetanordnungen 22.

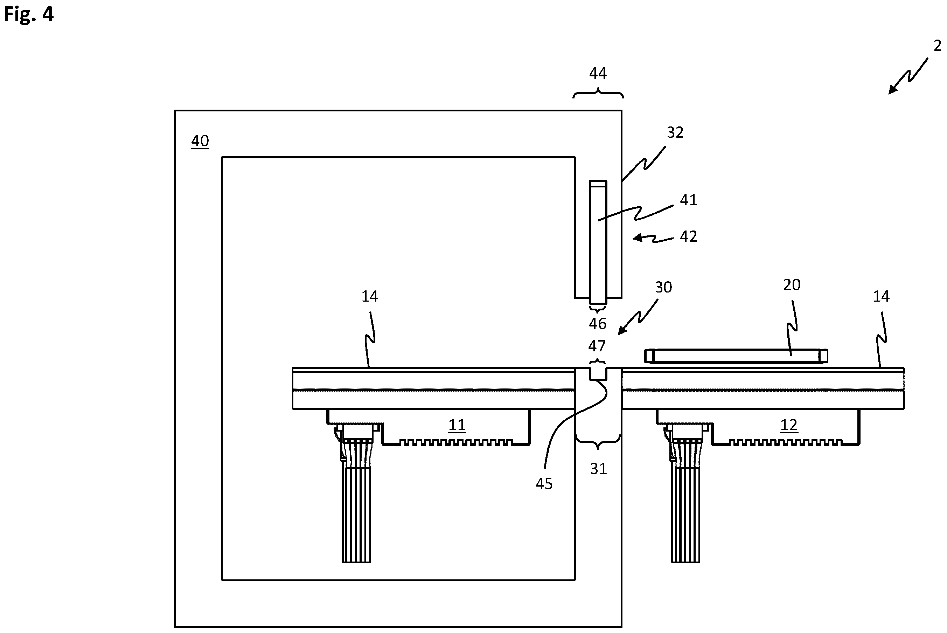

Fig. 4 zeigt einen schematischen Querschnitt einer Anordnung 2 eines ersten Statormoduls 11 und eines zweiten Statormoduls 12. Zwischen dem ersten Statormodul 11 und dem zweiten Statormodul 12 ist ein Spalt 30 mit einer Spaltbreite 31 ausgebildet. Ein Läufer 20 befindet sich über dem zweiten Statormodul 12. Das erste Statormodul 11 und das zweite Statormodul 12 können dabei dem in Fig. 1 beschriebenen Statormodulen entsprechen, die Spaltbreite 31 kann ebenfalls wie für Fig. 1 beschrieben ausgestaltet sein.

Im Bereich des Spalts 30 ist ein Funktionselement 32 angeordnet. Das Funktionselement 32 umfasst eine bewegliche Tür 41 und ein Gehäuse 40. Die bewegliche Tür 41 befindet sich in einer Öffnungsstellung 42, so dass der Läufer 20 unter der beweglichen Tür 41 vom zweiten Statormodul 12 zum ersten Statormoduls 11 über den Spalt 30 bewegt werden kann und dabei nicht von der beweglichen Tür 41 beeinflusst wird. Die bewegliche Tür 41 ist in diesem Ausführungsbeispiel in der Öffnungsstellung 42 komplett oberhalb der Statoroberflächen 14 des ersten Statormoduls 11 beziehungsweise des zweiten Statormoduls 12 angeordnet.

Eine Gehäusewandstärke 44 entspricht der Spaltbreite 31. Alternativ kann auch vorgesehen sein, dass die Gehäusewandstärke 44 kleiner oder größer als die Spaltbreite 31 ist. Im Bereich des Spalts 30 weist das Gehäuse 40 eine Vertiefung 45 auf. Die bewegliche Tür 41 kann in Richtung der Vertiefung 45 bewegt werden. Die Vertiefung 45 ist dabei so bemessen, dass eine Türstärke 46 kleiner oder gleich einer Vertiefungsbreite 47 ist und die bewegliche Tür 41 dadurch teilweise innerhalb der Vertiefung 45 angeordnet werden kann.

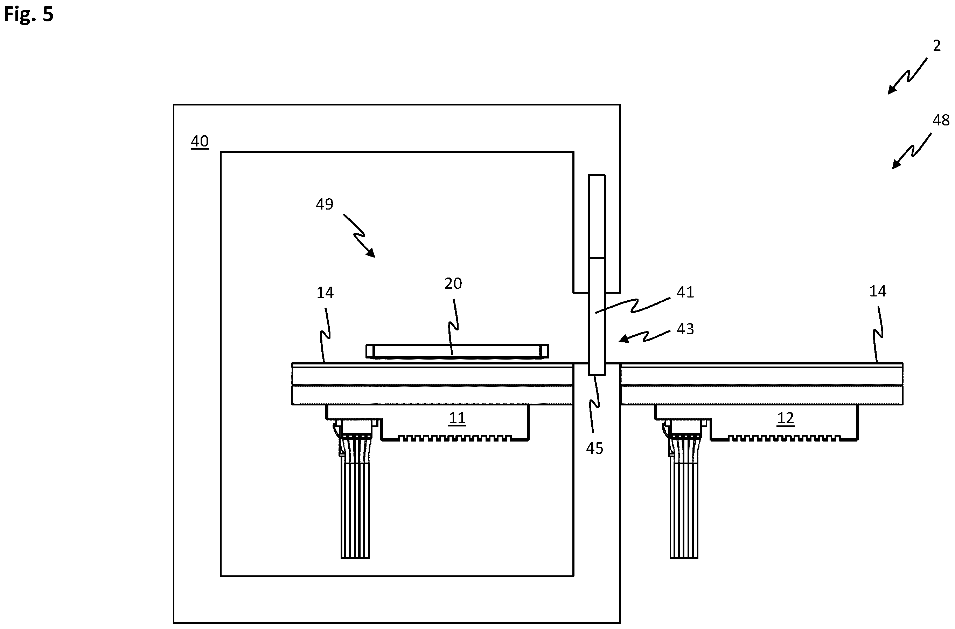

Fig. 5 zeigt einen Querschnitt der Anordnung 2 der Fig. 4 nachdem der Läufer 20 in das Gehäuse 40 hinein und damit zum ersten Statormodul 11 bewegt wurde. Ferner ist die bewegliche Tür 41 in einer Schließstellung 43 angeordnet und verschließt das Gehäuse 40. Dabei kann vorgesehen sein, dass das Gehäuse 40, wenn die bewegliche Tür 41 in der Schließstellung 43 angeordnet ist, die bewegliche Tür 41 also geschlossen ist, fluiddicht und/oder gasdicht und/oder partikeldicht ist. Der Läufer 20 ist also durch die bewegliche Tür 41 und das Gehäuse 40 von einem Gehäuseäußeren 48 getrennt und in einem Gehäuseinneren 49 angeordnet. Die bewegliche Tür 41 ist dabei teilweise in der Vertiefung 45 angeordnet. Dadurch kann eine Bewegung der beweglichen Tür 41 in Richtung des ersten Statormoduls 11 beziehungsweise des zweiten Statormoduls 12 in der Schließstellung 43 vermindert oder gänzlich unterbunden werden. Sollte nun ein weiterer Läufer vom zweiten Statormodul 12 auf die bewegliche Tür 41 zubewegt werden, würde die bewegliche Tür 41 selbst bei einer unbeabsichtigten Kollision des weiteren Läufers mit der beweglichen Tür 41 nicht zu einer Bewegung der beweglichen Tür 41 in Richtung des ersten Statormoduls 11 führen. Ebenfalls würde eine unbeabsichtigte Bewegung des Läufers 20 in Richtung der beweglichen Tür 41 selbst bei einer unbeabsichtigten Kollision des Läufers 20 mit der beweglichen Tür 41 nicht zu einer Bewegung der beweglichen Tür 41 in Richtung des zweiten Statormoduls 12 führen. Die bewegliche Tür 41 ist in diesem Ausführungsbeispiel in der Schließstellung 43 teilweise oberhalb und teilweise unterhalb der Statoroberflächen 14 des ersten Statormoduls 11 beziehungsweise des zweiten Statormoduls 12 angeordnet.

Im Gehäuseinneren 49 kann dabei eine in Fig. 5 nicht dargestellte Bearbeitungsstation angeordnet sein. Die Bearbeitungsstation kann dabei eingerichtet sein, ein auf dem Läufer 20 angeordnetes, nicht gezeigtes Werkstück zu bearbeiten. Ist die Bearbeitungsstation beispielsweise zum Zerspanen des Werkstücks eingerichtet, dann kann durch das geschlossene Gehäuse 40 erreicht werden, dass während des Zerspanens erzeugte Späne innerhalb des Gehäuseinneren 49 verbleiben und das Gehäuseäußere 48 nicht erreichen. Hierzu kann das Gehäuse 40 zusätzlich eine entsprechende Absaugung aufweisen.

Ebenfalls kann im Gehäuseinneren 49 eine Vorrichtung zum Aufbringen einer Flüssigkeit auf ein Werkstück auf dem Läufer 20 angeordnet sein. Ist das Gehäuse 40 fluiddicht ausgeführt, kann erreicht werden, dass die Flüssigkeit das Gehäuseäußere 48 nicht erreicht. Alternativ kann im Gehäuseinneren 49 eine Vorrichtung zum Aufbringen eines Gases auf ein Werkstück auf dem Läufer 20 angeordnet sein. Ist das Gehäuse 40 gasdicht ausgeführt, kann erreicht werden, dass das Gas das Gehäuseäußere 48 nicht erreicht. In diesem Fall kann zusätzlich eine Absaugung vorgesehen sein, mit der das Gas vor dem Öffnen der beweglichen Tür 41 wieder aus dem Gehäuseinneren 49 entfernt wird.

Nach der Bearbeitung des Werkstücks im Gehäuseinneren 49 kann die bewegliche Tür 41 dann wieder geöffnet werden und der Läufer 20 wieder aus dem Gehäuse 40 heraus bewegt werden.

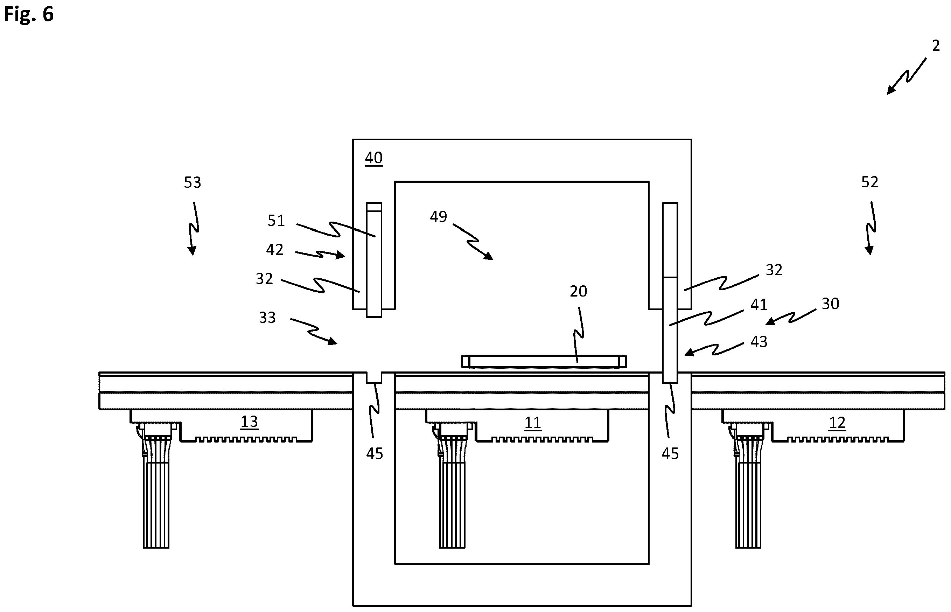

Fig. 6 zeigt einen Querschnitt der Anordnung 2 der Fig. 5, sofern im Folgenden keine Unterschiede beschrieben sind. Die Anordnung 2 der Statormodule 10 weist ein drittes Statormodul 13 auf. Das dritte Statormodul 13 ist beabstandet zum ersten Statormodul 11 angeordnet, wobei hierdurch ein weiterer Spalt 33 gebildet ist, der in seinen Abmessungen dem Spalt 30 entsprechen kann. Das dritte Statormodul 13 ist außerhalb des Gehäuses 40 angeordnet, so dass das Gehäuse 40 das erste Statorelement 11 umschließt. Im Bereich des weiteren Spalts 33 weist das Gehäuse 40 eine weitere bewegliche Tür 51 auf, die sich in einer Öffnungsstellung 42 befindet, jedoch analog zur beweglichen Tür 41 geschlossen werden kann. Hierzu weist das Gehäuse 40 im Bereich des weiteren Spalts 33 eine weitere Vertiefung 45 auf.

Die Anordnung 2 gemäß Fig. 6 kann ebenfalls wie für Fig. 4 und 5 erläutert, zur Aufnahme einer Bearbeitungsstation dienen. Ein auf dem Läufer 20 angeordnetes Werkstück kann dann vom zweiten Statormodul 12 aus in das Gehäuse 40 verbracht und dort bearbeitet werden. Anschließend kann der Läufer 20 das Gehäuse 40 durch die weitere bewegliche Tür 51 wieder verlassen. Dadurch werden einfachere Prozessabläufe ermöglicht, da im Gegensatz zur Anordnung 2 gemäß der Fig. 4 und 5 der Läufer 20 nicht zurückbewegt werden muss, sondern in einer durchgehenden Bewegung in einer Richtung bewegt werden kann.

Ein Gehäuse 40 wie in Fig. 6 dargestellt kann alternativ oder zusätzlich als Schleuse verwendet werden. Ein erstes Gehäuseäußeres 52 im Bereich des zweiten Statormoduls 12 kann von einem zweiten Gehäuseäußeren 53 im Bereich des dritten Statormoduls 13 getrennt sein. Wird jeweils nur entweder die bewegliche Tür 41 oder die weitere bewegliche Tür 51 geöffnet, so ist das Gehäuseinnere 49 nur mit dem ersten Gehäuseäußeren 52 oder nur mit dem zweiten Gehäuseäußeren 53 verbunden. Das zweite Gehäuseäu-ßere 53 kann beispielsweise in einer Vakuumkammer angeordnet sein. Nachdem der Läufer 20 vom ersten Gehäuseäußeren 52 aus in das Gehäuseinnere 49 bewegt wurde, während die weitere bewegliche Tür 51 geschlossen war, kann nun die bewegliche Tür 41 ebenfalls geschlossen werden. Das Gehäuseinnere 49 ist dann sowohl vom ersten Gehäuseäußeren 52 als auch vom zweiten Gehäuseäußeren 53 getrennt. Wird nun das Gehäuseinnere 49 evakuiert, also ein Vakuum im Gehäuseinneren 49 erzeugt, kann anschließend die weitere bewegliche Tür 51 geöffnet und der Läufer in die das zweite Gehäuseäußere 53 umfassende Vakuumkammer bewegt werden. Ein identisches Verfahren kann angewendet werden, wenn das zweite Gehäuseäußere 53 in einem Reinraum und/oder einer Schutzgaskammer angeordnet ist.

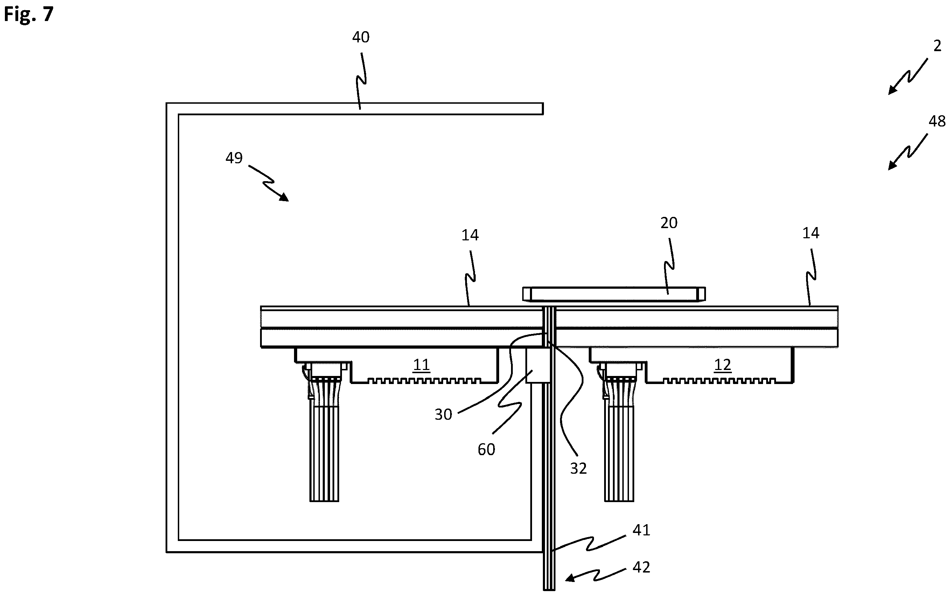

Fig. 7 zeigt einen Querschnitt durch eine Anordnung 2 von Statormodulen 10, die im Wesentlichen der Anordnung 2 der Fig. 4 entspricht, sofern im Folgenden keine Unterschiede beschrieben sind. Die bewegliche Tür 41 ist in der Öffnungsstellung 42 komplett unterhalb der Statoroberflächen 14 des ersten Statormoduls 11 beziehungsweise des zweiten Statormoduls 12 angeordnet. Der Läufer 20 befindet sich in einer Zwischenposition zwischen dem zweiten Statormodul 12 und dem ersten Statormodul 11 über der beweglichen Tür 41. Ferner ist in Fig. 7 noch ein Türantrieb 60 gezeigt, der zum Bewegen der beweglichen Tür 41 verwendet werden kann.

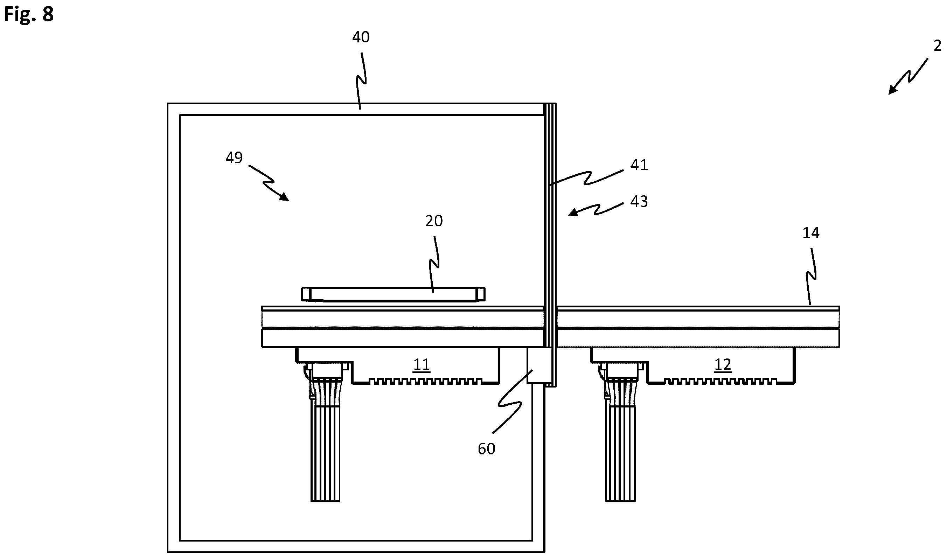

Fig. 8 zeigt einen Querschnitt durch die Anordnung 2 der Fig. 7 nachdem der Läufer 20 komplett in das Gehäuseinnere 49 bewegt und die bewegliche Tür 41 in die Schließstellung 43 gebracht wurde. Die bewegliche Tür 41 ist nun teilweise oberhalb und teilweise unterhalb der der Statoroberflächen 14 des ersten Statormoduls 11 beziehungsweise des zweiten Statormoduls 12 angeordnet. Dadurch kann eine Bewegung der beweglichen Tür 41 in Richtung des ersten Statormoduls 11 oder des zweiten Statormoduls 12 verhindert oder reduziert werden, ohne eine Vertiefung im Gehäuse 40 analog zu den Fig. 4 bis 6 vorsehen zu müssen, indem die bewegliche Tür zwischen dem ersten Statormodul 11 und dem zweiten Statormodul 12 arretiert wird.

Analog zum Ausführungsbeispiel der Fig. 6 kann im Gehäuse 40 der Fig. 7 und 8 ebenfalls eine weitere Tür vorgesehen sein. Das Gehäuse 40 kann die für die Fig. 4 bis 6 beschriebenen Funktionen übernehmen.

Die Gehäuse 40 der Fig. 4 bis 8 sind ebenfalls Teil der Erfindung. Hierzu können die Gehäuse 40 Haltemittel für das erste Statormodul 11 aufweisen. Darüber hinaus können innerhalb der Gehäuse 40 auch weitere Haltemittel für weitere Statormodule vorgesehen sein. Das erste Statormodul 11 und weitere Statormodule können zusammen mit dem Gehäuse ein gemeinsames Bauteil bilden.

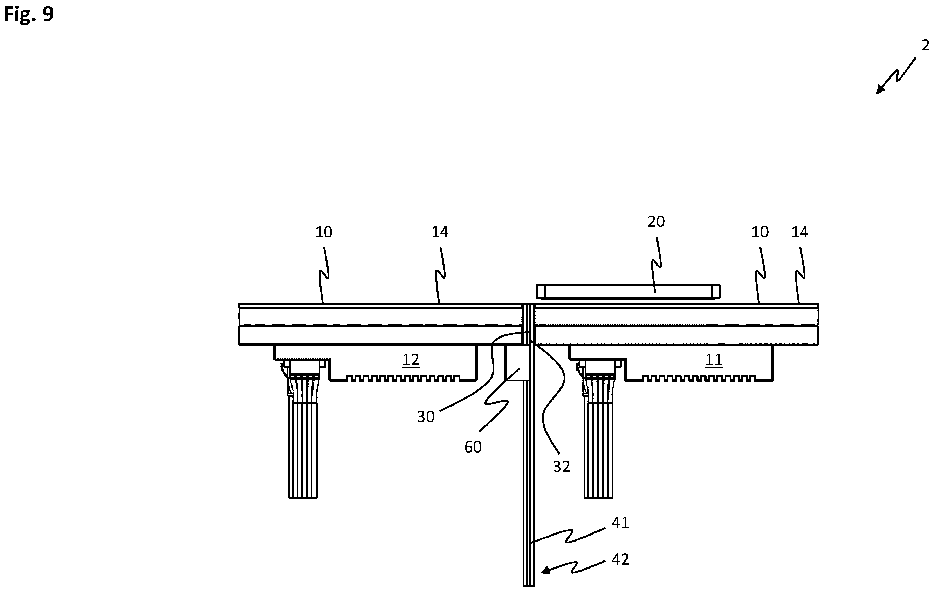

Fig. 9 zeigt eine Seitenansicht einer Anordnung 2 von Statormodulen 10, wobei ein Funktionselement 32 in einem Spalt 30 zwischen einem ersten Statormodul 11 und einem zweiten Statormodul 12 angeordnet ist und einem Läufer 20. Das Funktionselement 32 ist in Form einer beweglichen Tür 41 ausgestaltet. Die bewegliche Tür 41 ist in einer Öffnungsstellung 42 und analog zu Fig. 7 in der Öffnungsstellung 42 unterhalb der Statoroberflächen 14 der Statormodule 10 angeordnet. Ferner weist die bewegliche Tür 41 einen Türantrieb 60 auf, mit dem die bewegliche Tür 41 bewegt werden kann. Die bewegliche Tür 41 kann dabei als Schott zwischen dem ersten Statormodul 11 und dem zweiten Statormodul 12 dienen. Der Läufer 20 ist oberhalb des ersten Statormoduls 11 angeordnet. Durch die bewegliche Tür 41 können Bereiche der Anordnung 2 der Statormodule 10 voneinander abgegrenzt werden und somit unbeabsichtigte Bewegungen von Läufern 20 vermieden werden.

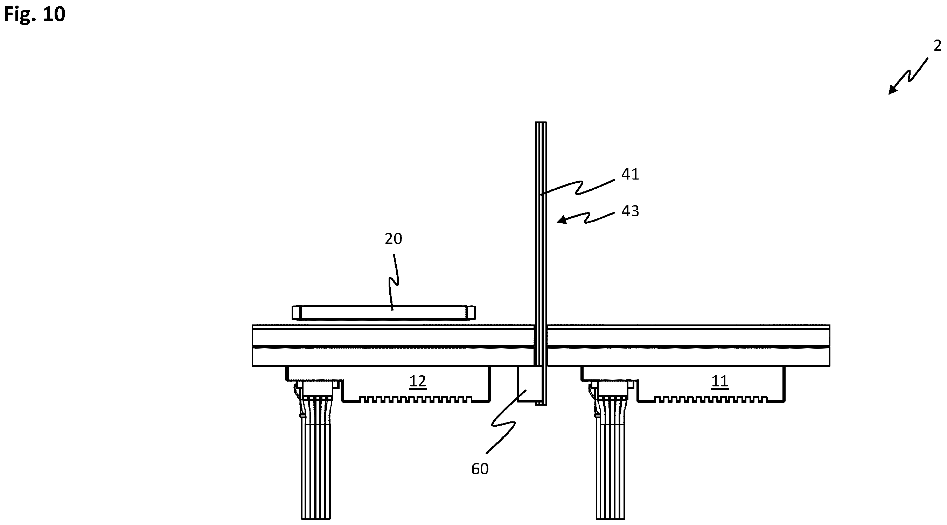

Fig. 10 zeigt die Anordnung 2 der Fig. 9 nachdem der Läufer 20 über den Spalt 30 hinweg und damit zum zweiten Statormodul 12 bewegt und danach die bewegliche Tür 41 in eine Schließstellung 43 gebracht wurde. Die bewegliche Tür 41 ist nun teilweise oberhalb und teilweise unterhalb der der Statoroberflächen 14 des ersten Statormoduls 11 beziehungsweise des zweiten Statormoduls 12 angeordnet. Dadurch kann eine Bewegung der beweglichen Tür 41 in Richtung des ersten Statormoduls 11 oder des zweiten Statormoduls 12 analog zu Fig. 8 verhindert oder reduziert werden.

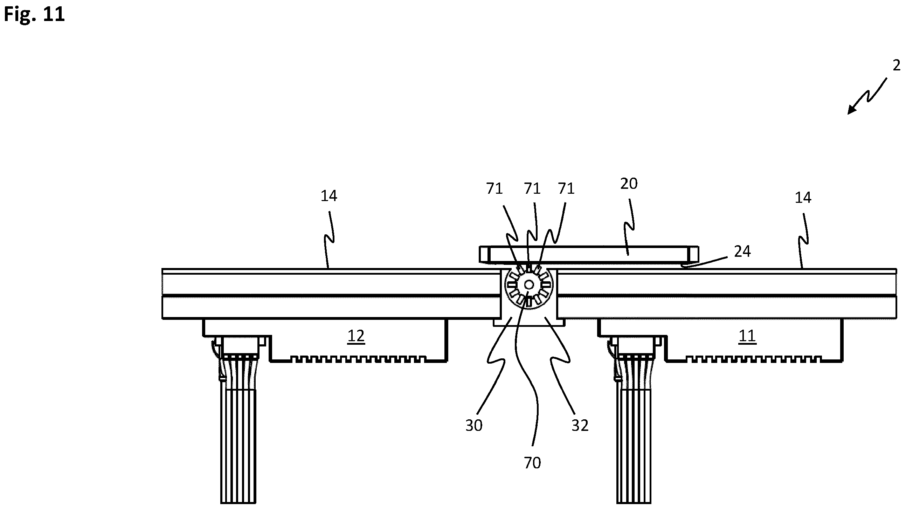

Fig. 11 zeigt eine Seitenansicht einer Anordnung 2 eines ersten Statormoduls 11 und eines zweiten Statormoduls 12 und einem Läufer 20. Zwischen dem ersten Statormodul 11 und dem zweiten Statormodul 12 ist ein Spalt 30 mit einem im Bereich des Spalts 30 angeordneten Funktionselement 32 angeordnet. Zur besseren Übersichtlichkeit ist das Funktionselement 32 im Querschnitt dargestellt. Das Funktionselement 32 weist eine Reinigungsbürste 70 auf. Das Funktionselement 32 mit der Reinigungsbürste 70 ist derart im Spalt 30 angeordnet, dass einzelne Borsten 71 im Bereich des Spalts 30 über die Statoroberflächen 14 hinausragen und das Funktionselement 32 ansonsten unterhalb der Statoroberflächen 14 angeordnet ist. Die über die Statoroberflächen 14 hinausragenden Borsten 71 der Reinigungsbürste 70 stehen teilweise in mechanischem Kontakt mit dem Läufer 20. Dabei kann vorgesehen sein, dass die Reinigungsbürste 70 feststehend ist und eine Reinigungswirkung dadurch erzeugt wird, dass der Läufer 20 über den Spalt 30 mit der Reinigungsbürste 70 bewegt wird und dabei Schmutz von einer Unterseite 24 des Läufers 20 entfernt wird. Alternativ kann die Reinigungsbürste 70 drehbar ausgestaltet sein. Schmutz von der Unterseite 24 des Läufers 20 kann dann sowohl durch eine Drehung der Reinigungsbürste 70 als auch durch ein Bewegen des Läufers 20 über die Reinigungsbürste 70 erfolgen.

Es kann vorgesehen sein, dass das Funktionselement 32 mit der Reinigungsbürste 70 senkrecht zu den Statoroberflächen 14 nach unten bewegt werden kann. Dadurch kann gesteuert werden, ob die Reinigungsbürste 70 mit einem über den Spalt 30 bewegten Läufer 20 in mechanischen Kontakt tritt oder nicht.

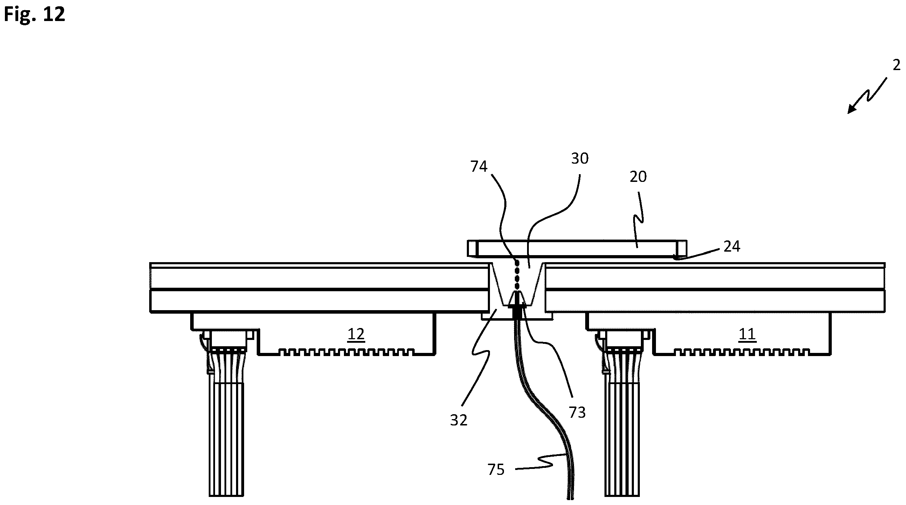

Fig. 12 zeigt eine Seitenansicht einer Anordnung 2 eines ersten Statormoduls 11 und eines zweiten Statormoduls 12 und einem Läufer 20. Zwischen dem ersten Statormodul 11 und dem zweiten Statormodul 12 ist ein Spalt 30 mit einem im Bereich des Spalts 30 angeordneten Funktionselement 32 angeordnet. Zur besseren Übersichtlichkeit ist das Funktionselement 32 im Querschnitt dargestellt. Das Funktionselement 32 weist eine Düse 73 zum Applizieren eines Fluids 74 auf. Das Fluid 74 kann ein Gas oder eine Flüssigkeit umfassen und mittels eines Anschlussschlauchs 75 zur Düse 73 transportiert werden. Nach dem Austritt aus der Düse 73 trifft das Fluid 74 eine Unterseite 24 des Läufers 20. Das Fluid 74 kann eine Druckluft umfassen, mit der beispielsweise Staub oder Späne von der Unterseite 24 des Läufers 20 entfernt werden können. Das Fluid 74 kann eine Reinigungsflüssigkeit oder eine Desinfektionsflüssigkeit umfassen. Ist das Fluid 74 eine Desinfektionsflüssigkeit, kann das Funktionselement 32 als Desinfektionselement bezeichnet werden.

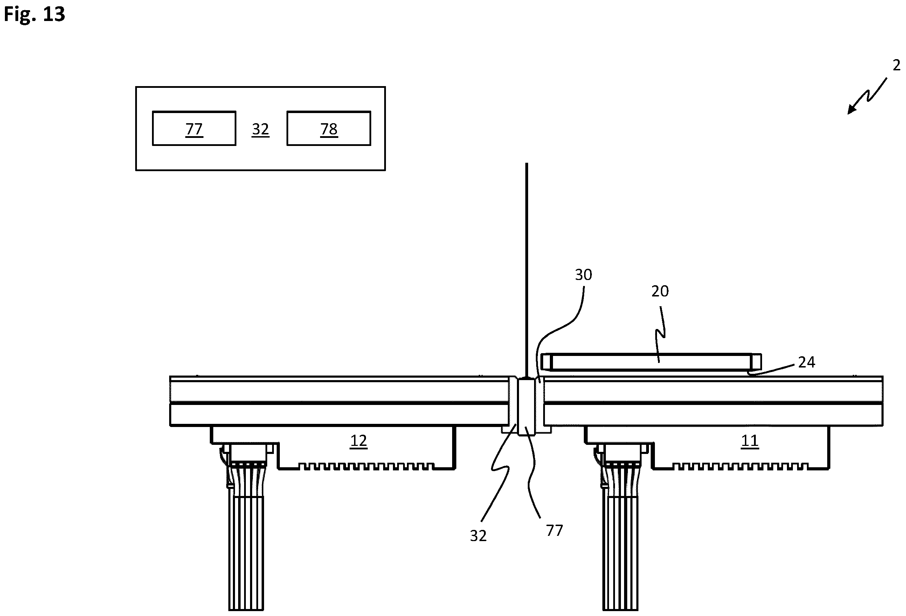

Fig. 13 zeigt eine Seitenansicht einer Anordnung 2 eines ersten Statormoduls 11 und eines zweiten Statormoduls 12 und einem Läufer 20. Zwischen dem ersten Statormodul 11 und dem zweiten Statormodul 12 ist ein Spalt 30 mit einem im Bereich des Spalts 30 angeordneten Funktionselement 32 angeordnet. Das Funktionselement 32 weist eine Lichtquelle 77 auf, mit der eine Unterseite 24 des Läufers 20 beleuchtet werden kann. Das Funktionselement 32 kann ferner einen hinter oder vor der Lichtquelle angeordneten Lichtdetektor 78 aufweisen, der in der Seitenansicht der Fig. 12 nicht dargestellt ist. In Fig. 13 ist darüber hinaus eine Draufsicht auf das Funktionselement 32 mit Lichtquelle 77 und Lichtdetektor 78 dargestellt. Mittels Lichtquelle 77 und Lichtdetektor 78 kann beispielsweise ein auf der Unterseite 24 des Läufers 20 angeordneter Barcode ausgelesen werden.

In einem alternativen Ausführungsbeispiel ist das Funktionselement 32 aufgebaut wie im Querschnitt der Fig. 13 dargestellt, weist jedoch keinen Lichtdetektor 78 auf. Die Lichtquelle 77 kann dann beispielsweise als UV-Lichtquelle ausgestaltet sein, wobei die Unterseite 24 des Läufers 20 mittels durch die UV-Lichtquelle ausgesendeter UV-Strahlung desinfiziert werden kann. Ein solches Funktionselement 32 kann ebenfalls als Desinfektionselement bezeichnet werden.

In einem weiteren alternativen Ausführungsbeispiel des Funktionselements 32 ist der Lichtdetektor 78 vorgesehen, nicht jedoch die Lichtquelle 77. Der Lichtdetektor kann dabei beispielsweise eine Kamera aufweisen, mit der ebenfalls ein Barcode auf der Unterseite 24 des Läufers 20 ausgelesen werden kann.

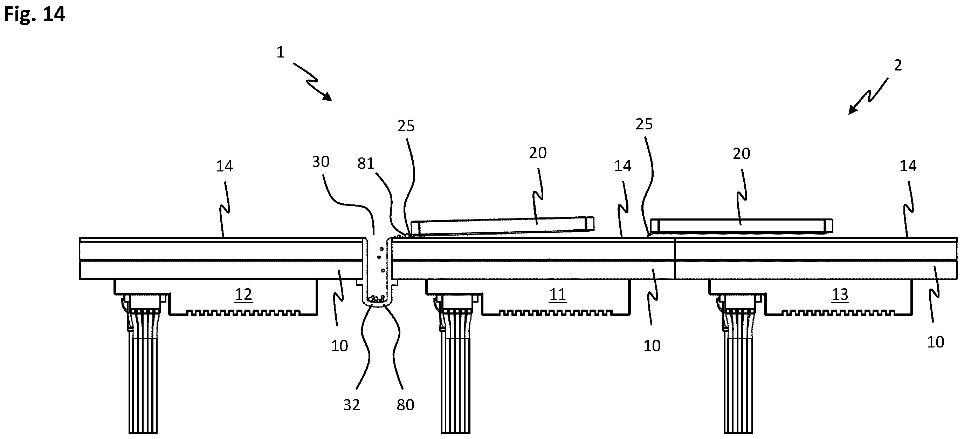

Fig. 14 zeigt eine Seitenansicht einer Anordnung 2 von Statormodulen 10 mit jeweils einer Statoroberfläche 14, wobei ein Spalt 30 zwischen einem ersten Statormodul 11 und einem zweiten Statormodul 12 angeordnet ist. Auf der gegenüberliegenden Seite des Spalts 30 ist an das erste Statormodul 11 angrenzend ein drittes Statormodul 13 angeordnet. Ein Funktionselement 32 ist im Spalt 30 angeordnet und weist einen Auffangbehälter 80 für auf den Statoroberflächen 14 befindliche Schmutzpartikel 81 auf. Zur besseren Übersichtlichkeit ist das Funktionselement 32 im Querschnitt dargestellt. Oberhalb der Statoroberflächen 14 sind zwei Läufer 20 angeordnet, die jeweils einen Räumschild 25 aufweisen. Die Läufer 20 mit den Räumschilden 25 können mittels durch die Statormodule 10 erzeugten Magnetfeldern in einer schrägen Position gehalten werden derart, dass die Räumschilde 25 auf den Statoroberflächen 14 aufliegen. Werden die Läufer 20 dann bewegt, können die Schmutzpartikel 81 in Richtung des Spalts 30 bewegt werden und in den Auffangbehälter 80 gelangen. Dadurch können die Statoroberflächen 14 sauber gehalten werden. In einem Planarantriebssystem 1 bestehend aus der Anordnung 2 und den Läufern 20 kann vorgesehen sein, nicht alle der Läufer 20 mit einem entsprechenden Räumschild 25 auszustatten.

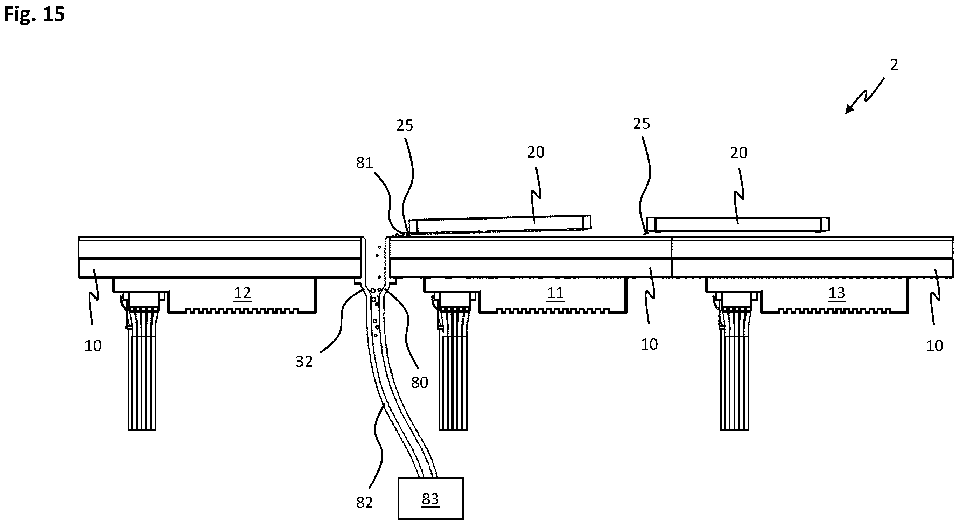

Fig. 15 zeigt eine Seitenansicht einer Anordnung 2 von Statormodulen 10, die der Anordnung 2 der Fig. 14 entspricht, sofern im Folgenden keine Unterschiede beschrieben sind. Der Auffangbehälter 80 weist zusätzlich einen Schlauch 82 auf, der zu einer Absaugevorrichtung 83 führt. Die Schmutzpartikel 81 werden dann nicht nur im Auffangbehälter 80 gesammelt, sondern mittels der Absaugvorrichtung 83 entfernt und so die Anordnung 2 sauber gehalten.

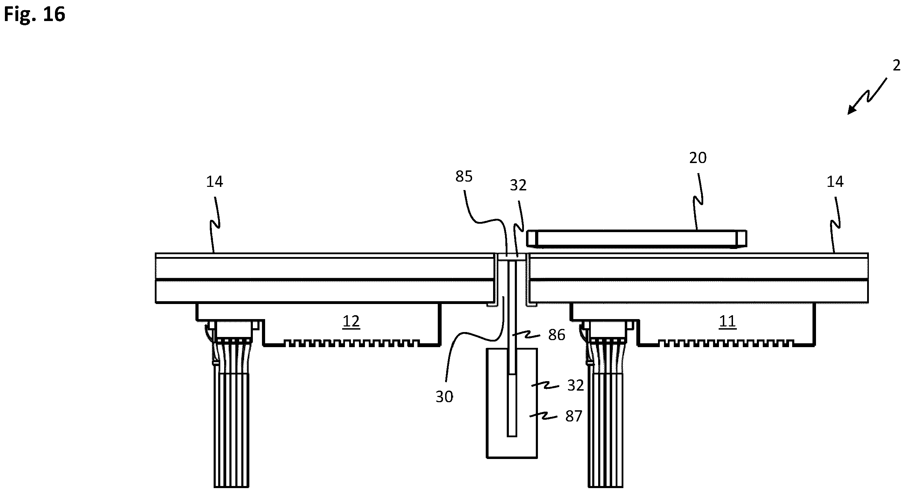

Fig. 16 zeigt eine Seitenansicht einer Anordnung 2 eines ersten Statormoduls 11 und eines zweiten Statormoduls 12 und einem Läufer 20. Zwischen dem ersten Statormodul 11 und dem zweiten Statormodul 12 ist ein Spalt 30 mit einem im Bereich des Spalts 30 angeordneten Funktionselement 32 angeordnet. Zur besseren Übersichtlichkeit ist das Funktionselement 32 im Querschnitt dargestellt. Das Funktionselement 32 weist einen Deckel 85 auf. Der Deckel 85 ist so bemessen, dass mittels des Deckels 85 der Spalt 30 zumindest teilweise verschlossen werden kann, so dass die Statoroberflächen 14 des ersten Statormoduls 11 beziehungsweise des zweiten Statormoduls 12 zusammen mit dem Deckel 85 eine durchgehende Fläche bilden. Ebenfalls in Fig. 15 dargestellt ist, dass der Deckel 85 mittels einer Stange 86 mit einem Antrieb 87 verbunden ist, wobei die Stange 86 und der Antrieb 87 optional sind. Mittels des Antriebs 87 und der Stange 86 kann der Deckel senkrecht zu den Statoroberflächen 14 verschoben werden. Dadurch kann der Spalt 30 geöffnet und wieder verschlossen werden.

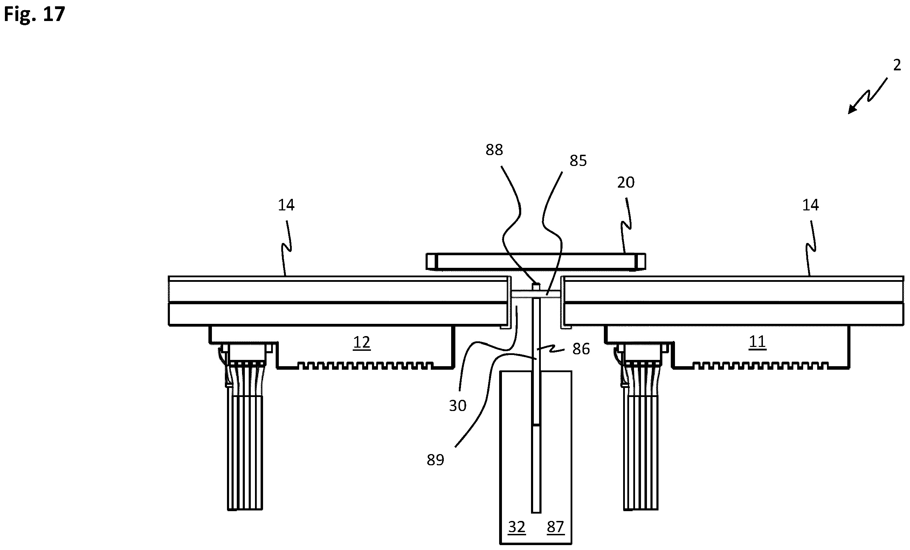

Fig. 17 zeigt eine Seitenansicht einer Anordnung 2 eines ersten Statormoduls 11 und eines zweiten Statormoduls 12, die im Wesentlichen der Anordnung 2 der Fig. 16 entspricht, sofern im Folgenden keine Unterschiede beschrieben sind. Oberhalb des Deckels 85 ist ein Stift 88 angeordnet. Ein Läufer 20 ist direkt über dem Spalt 30 angeordnet. Ist der Läufer 20 wie in Fig. 2 dargestellt ausgestaltet und weist insbesondere die Aufnahme 23 auf, kann vorgesehen sein, den Deckel 85 solange auf den Läufer 20 mittels des Antriebs 87 zuzubewegen, bis der Stift 88 in die Aufnahme 23 eingreift. Dadurch wird eine mechanische Fixierung des Läufers 20 erreicht. Dadurch kann einerseits verhindert werden, dass sich der Läufer 20 parallel zu den Statoroberflächen 14 des ersten Statormoduls 11 beziehungsweise des zweiten Statormoduls 12 bewegt, wenn ein Werkstück auf dem Läufer 20 mechanisch bearbeitet wird. Ferner kann vorgesehen sein, Kräfte senkrecht zu den Statoroberflächen 14, die in Richtung der Statoroberflächen 14 während einer Bearbeitung des Werkstücks führen, über den Stift 88, den Deckel 85, die Stange 86 und den Antrieb 87 oder über einen Teil der genannten Bauteile abzufangen und so mechanische Belastungen der Statoroberflächen 14 zu verringern oder zu vermeiden. Insbesondere kann durch diese Ausgestaltung erreicht werden, dass selbst wenn die bei einer Bearbeitung eines Werkstücks auf das Werkstück senkrecht zu den Statoroberflächen 14 und in Richtung der Statoroberflächen 14 wirkende Kraft größer ist als eine durch das erste Statormodul 11 beziehungsweise das zweite Statormodul 12 mittels durch diese erzeugter Magnetfelder bereitgestellte Tragkraft, der Läufer 20 trotzdem nicht auf den Statoroberflächen 14 aufliegt. Der Deckel 85, die Stange 86 und der Stift 88 bilden somit ein Halteelement 89.

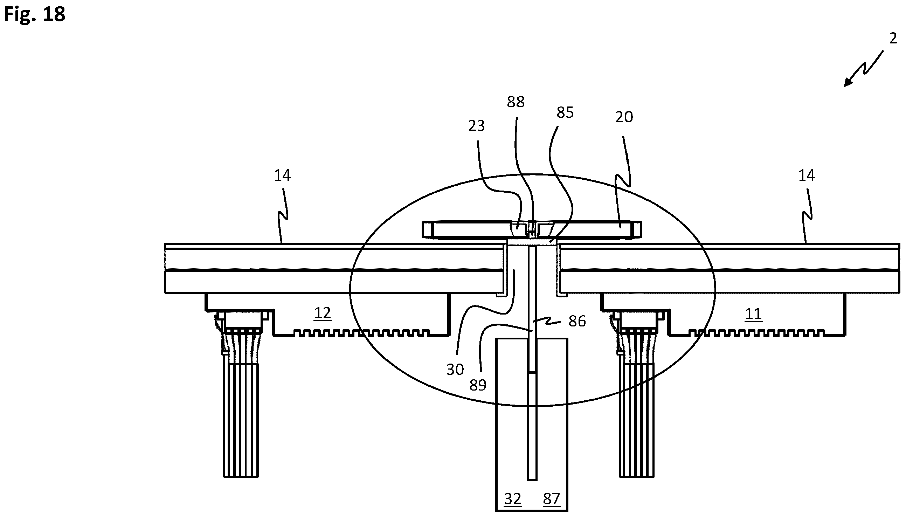

Fig. 18 zeigt die Anordnung 2 der Fig. 17, wobei der Deckel 85 mit dem Stift 88 in die Aufnahme 23 des Läufers 20 eingreift. Der Läufer 20 ist nun parallel zu den Statoroberflächen 14 fixiert und kann auch nicht mehr auf die Statoroberflächen 14 gedrückt werden.

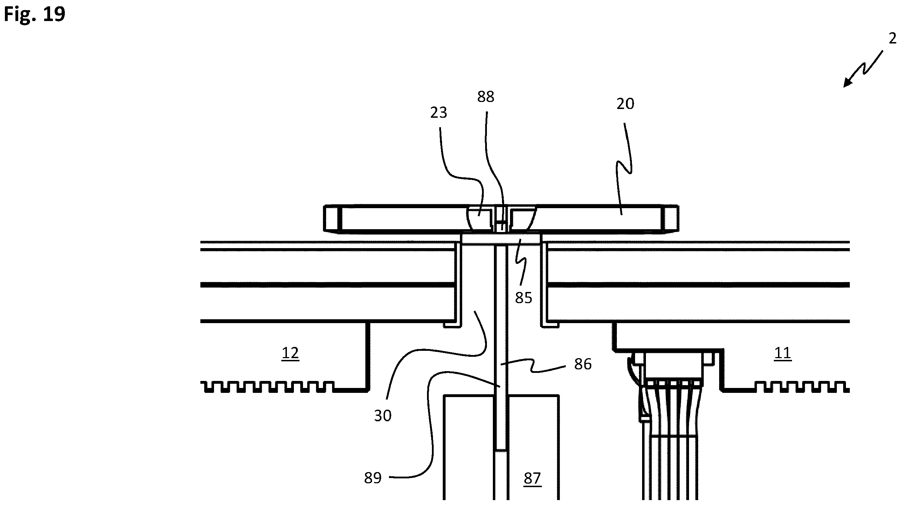

Fig. 19 zeigt eine vergrößerte Darstellung der Aufnahme 23 und des Stifts 88 der Fig. 18. In den Fig. 18 und 19 ist der Läufer 20 teilweise geschnitten dargestellt, um das Eingreifen des Stifts 88 in die Aufnahme 23 des Läufers 20 darstellen zu können. Aus Gründen der Übersichtlichkeit wurde auf eine Schraffur der Schnittflächen verzichtet.

Im Ausführungsbeispiel der Fig. 17 bis 19 ist der Deckel 85 annähernd so breit wie der Spalt 30. In Alternativen Ausführungsbeispielen kann der Deckel 85 anders bemessen sein, solange der Deckel nicht größer als der Spalt 30 ist. Ferner ist in dem in den Fig. 17 bis 19 gezeigten Ausführungsbeispiel der Läufer 20 drehbar um den Stift 88. In alternativen Ausführungsformen kann vorgesehen sein, dass der Deckel 85 mehrere Stifte 88 aufweist und der Läufer 20 mehrere Aufnahmen 23 aufweist, wobei jeweils ein Stift 88 in eine Aufnahme 23 eingreifen kann. Dann ist auch eine Drehung des Läufers 20 nicht mehr möglich.

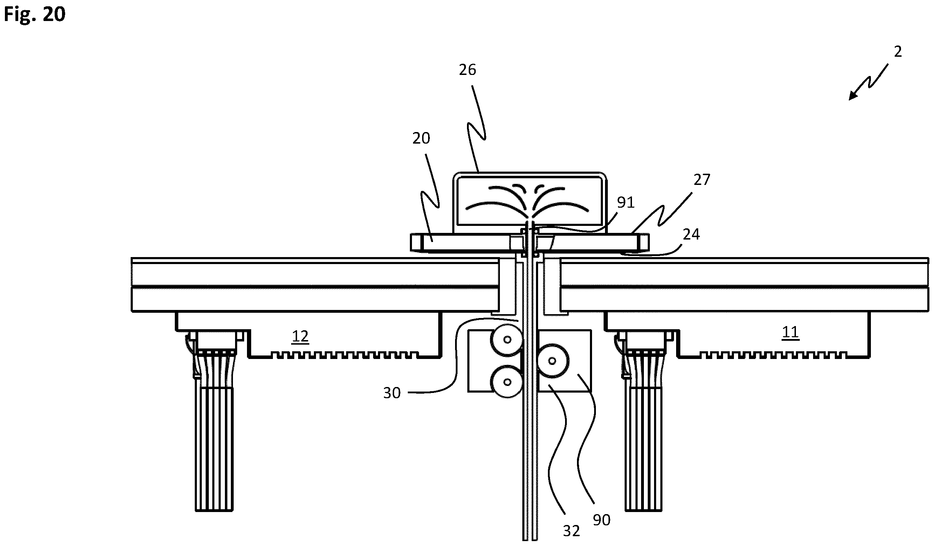

Fig. 20 zeigt eine Seitenansicht einer Anordnung 2 eines ersten Statormoduls 11 und eines zweiten Statormoduls 12 und einem Läufer 20. Zwischen dem ersten Statormodul 11 und dem zweiten Statormodul 12 ist ein Spalt 30 mit einem im Bereich des Spalts 30 angeordneten Funktionselement 32 angeordnet. Der Läufer 20 weist einen Tank 26 auf einer Oberseite 27 des Läufers 20 auf, beispielsweise für eine Flüssigkeit und/oder ein Gas. Das Funktionselement 32 weist eine Betankungsvorrichtung 90 auf. Mittels einer ausfahrbaren Düse 91 kann der Tank 26 des Läufers 20 mit einer Flüssigkeit und/oder einem Gas gefüllt werden. Die ausfahrbare Düse 91 kann dabei zwischen dem ersten Statormodul 11 und dem zweiten Statormodul 12 im Spalt 30 angeordnet sein. Wird der Läufer 20 mit dem Tank 26 über den Spalt bewegt, kann die ausfahrbare Düse 91 von einer Unterseite 24 des Läufers 20 in den Tank 26 eingreifen. Nun können Flüssigkeiten und/oder Gase in den Tank 26 transferiert werden. Nach Beendigung des Tankvorgangs kann die ausfahrbare Düse 91 wieder zurück in den Spalt 30 bewegt werden. In Fig. 20 ist der Läufer 20 mit dem Tank 26 sowie das Funktionselement 32 mit der ausfahrbaren Düse 91 teilweise geschnitten dargestellt, um das Eingreifen der ausfahrbaren Düse 91 in den Tank 26 des Läufers 20 darstellen zu können. Aus Gründen der Übersichtlichkeit wurde auf eine Schraffur der Schnittflächen verzichtet.

Die in den Fig. 1 bis 20 gezeigten Ausführungsbeispiele der Anordnung 2 der Statormodule 10 können jeweils auf der in der deutschen Patentanmeldung DE 10 2017 131 324 A1, offenbarten Trägereinrichtung angeordnet werden. Insbesondere die in Fig. 17 der deutschen Patentanmeldung DE 10 2017 131 324 A1 gezeigte Trägereinrichtung kann alternativ zu der in dieser Anmeldung offenbarten Anordnung der Statormodule ohne Abstand zueinander genutzt werden, um die Spalte 30 auszubilden, da hier Statormodule beabstandet zueinander zwischen den Trägerelementen angeordnet werden können.

Die im Spalt 30 der Fig. 9 bis 20 angeordneten Funktionselemente 32 sind ebenfalls Teil der Erfindung, wenn sie derart ausgestaltet sind, dass sie einerseits im Spalt 30 zwischen erstem Statormodul 11 und zweitem Statormodul 12 angeordnet werden können und dabei ihre Abmessungen derart ausgestaltet sind, dass der maximale Wert der Spaltbreite 31 nicht überschritten wird.

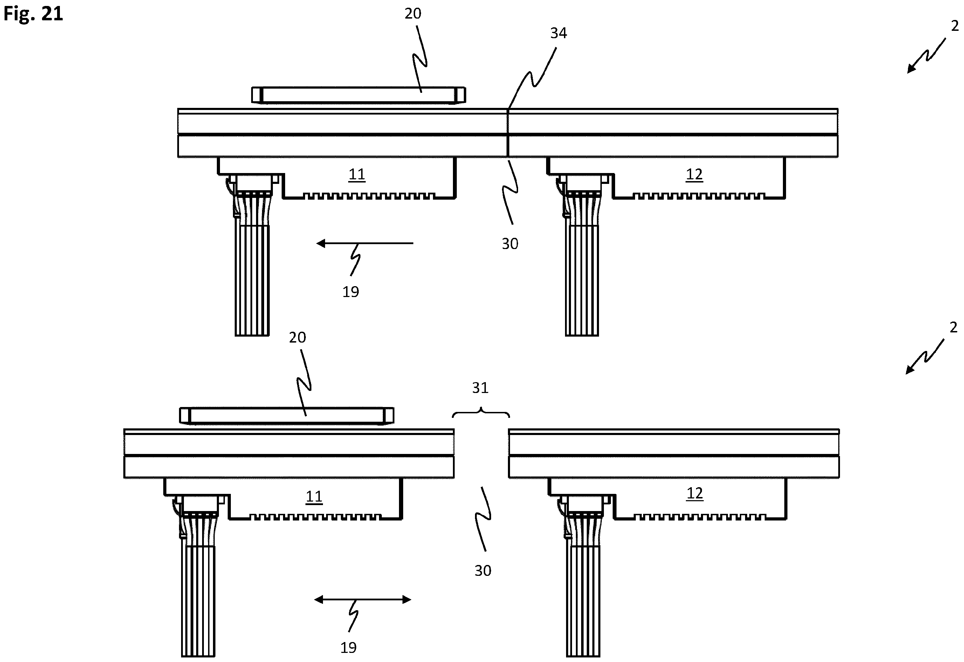

Fig. 21 zeigt zwei Seitenansichten eines weiteren Ausführungsbeispiels einer Anordnung 2 eines ersten Statormoduls 11 und eines zweiten Statormoduls 12 und eines Läufers 20. Das erste Statormodul 11 ist beweglich angeordnet und kann in einer Bewegungsrichtung 19 bewegt werden. Dadurch ist ein Spalt 30 zwischen dem ersten Statormodul 11 und dem zweiten Statormodul 12 variabel in seiner Spaltbreite 31. In der oberen Darstellung der Fig. 21 ist der Spalt 30 als geschlossener Spalt 34 ausgeführt. Das erste Statormodul 11 grenzt dabei direkt an das zweite Statormodul 12 an. Die Bewegungsrichtung 19 ist in diesem Fall eingeschränkt, eine Bewegung des ersten Statormoduls 11 ist nur möglich weg vom zweiten Statormodul 12. In der unteren Darstellung der Fig. 21 ist der Spalt 30 geöffnet und kann dabei dem Spalt 30 des Ausführungsbeispiels der Fig. 1 entsprechen.

Der Läufer 20 ist oberhalb des ersten Statormoduls 11 angeordnet. Der Läufer 20 kann insbesondere während der Bewegung des ersten Statormoduls 11 oberhalb des ersten Statormoduls 11 angeordnet bleiben und dadurch in die Bewegungsrichtung 19 mitbewegt werden.

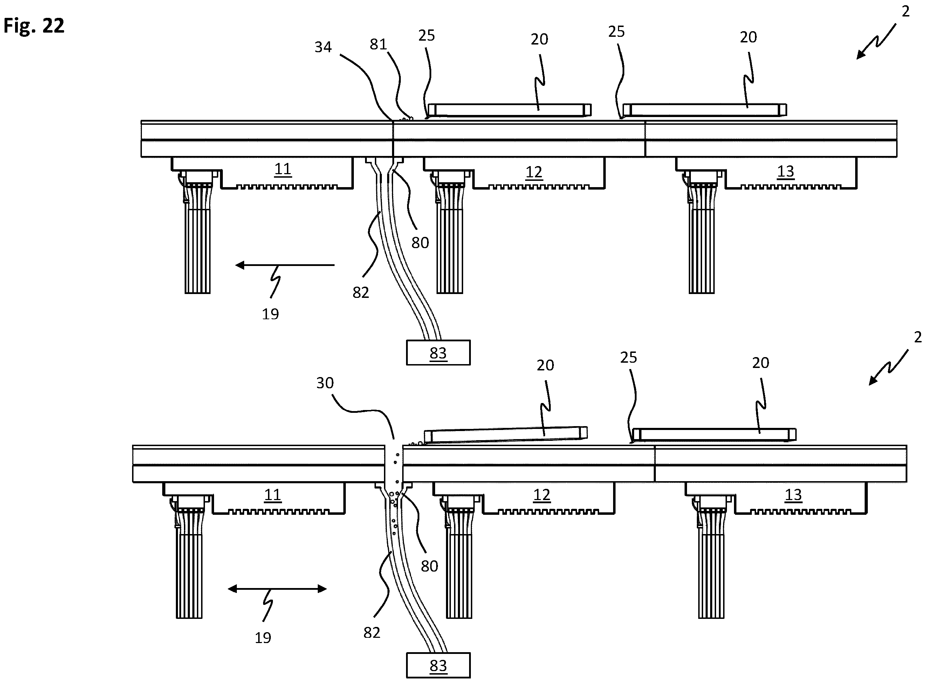

Fig. 22 zeigt zwei Seitenansichten eines weiteren Ausführungsbeispiels einer Anordnung 2 eines ersten Statormoduls 11, eines zweiten Statormoduls 12 und eines dritten Statormoduls 13 mit mehreren Läufern 20, das eine Kombination der Ausführungsbeispiele der Fig. 15 und 21 ist. Der Auffangbehälter 80 ist unter dem ersten Statormodul 11 angeordnet. In der oberen Darstellung grenzt das erste Statormodul 11 analog zu Fig. 21 an das zweite Statormodul 12 an, der Auffangbehälter 80 ist somit nicht zugänglich. Wird nun das erste Statormodul 11 in Bewegungsrichtung 19 vom zweiten Statormodul 12 weg bewegt, öffnet sich dadurch der Spalt 30 und der unterhalb des Spalts 30 angeordnete Auffangbehälter 80 wird zugänglich. Die analog zu Fig. 15 ausgestalteten Läufer 20 können dann mittels der Räumschilde 25 Schmutzpartikel 81 in Richtung des Spalts 30 und damit in den Auffangbehälter bewegen. Der Auffangbehälter 80 weist einen Schlauch 82 auf der zu einer Absaugvorrichtung 83 führt. Die Schmutzpartikel 81 werden dann nicht nur im Auffangbehälter 80 gesammelt, sondern mittels der Absaugvorrichtung 83 entfernt und so die Anordnung 2 sauber gehalten.

Dies ermöglicht, im Normalbetrieb eine durchgehende Statoroberfläche 14 ohne Spalt 30 vorzusehen und den Spalt 30 beispielsweise nur zu Reinigungszwecken zu öffnen. Es kann vorgesehen sein, in einem Planarantriebssystem 1 mehrere der Fig. 22 entsprechende Anordnungen vorzusehen.

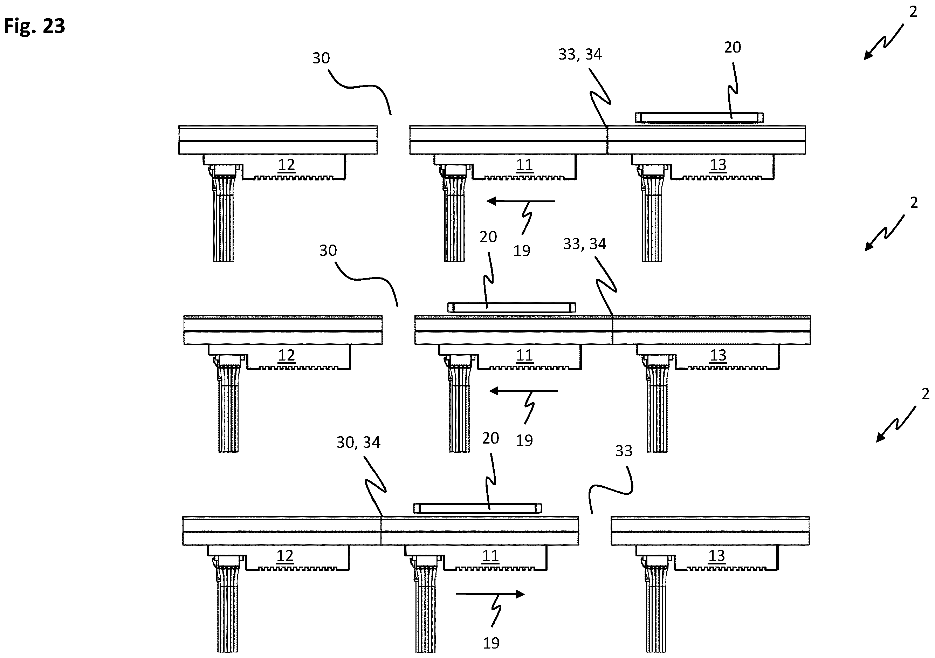

Fig. 23 zeigt drei Seitenansichten durch eine Anordnung 2 eines ersten Statormoduls 11, eines zweiten Statormoduls 12 und eines dritten Statormoduls 13 sowie einen Läufer 20. Das erste Statormodul 11 ist dabei beweglich angeordnet und in eine Bewegungsrichtung 19 in Richtung des zweiten Statormoduls 12 oder in Richtung des dritten Statormoduls 13 bewegbar. In der oberen Darstellung grenzt das erste Statormodul 11 direkt an das dritte Statormodul 13 an und ist beabstandet zum zweiten Statormodul 12 angeordnet. Ein Spalt 30 ist zwischen dem ersten Statormodul 11 und dem zweiten Statormodul 12 angeordnet. Zwischen dem ersten Statormodul 11 und dem dritten Statormodul 13 ist ein weiterer Spalt 33 angeordnet, der in der oberen Darstellung ein geschlossener Spalt 34 ist. Der Läufer 20 ist oberhalb des dritten Statormoduls 13 angeordnet.

In der mittleren Darstellung der Fig. 23 sind das erste Statormodul 11, das zweite Statormodul 12 und das dritte Statormodul 13 wie in der ersten Darstellung angeordnet. Der Läufer 20 befindet sich nun oberhalb des ersten Statormoduls 11.

In der unteren Darstellung der Fig. 23 wurde das erste Statormodul 11 in Richtung des zweiten Statormoduls 12 bewegt, so dass das erste Statormodul 11 nun an das zweite Statormodul 12 angrenzt. Der Spalt 30 ist nun ein geschlossener Spalt 34, während der weitere Spalt 33 nun offen ist. Der Läufer 20 kann nun vom ersten Statormodul 11 zum zweiten Statormodul 12 bewegt werden.

Das erste Statormodul 11 der Anordnung 2 der Fig. 23 kann also dazu dienen, den Läufer vom dritten Statormodul 13 zum zweiten Statormodul 12 zu bewegen, ohne dass der Läufer 20 über den geöffneten Spalt 30 oder den geöffneten weiteren Spalt 33 bewegt werden muss, indem das erste Statormodul 11 mitsamt dem Läufer 20 bewegt wird. Das bewegliche erste Statormodul 11 kann also dazu dienen, den Läufer 20 von einem ersten Anlagenteil eines Planarantriebssystems zu einem zweiten Anlagenteil eines Planarantriebssystems zu überführen. Das dritte Statormodul 13 kann dann Teil des ersten Anlagenteils sein. Das zweite Statormodul 12 kann dann Teil des zweiten Anlagenteils sein.

Bezugszeichenliste

| | |
|---|---|
| 1 | Planarantriebssystem |
| 2 | Anordnung |
| 3 | erster Bereich |
| 4 | zweiter Bereich |
| 10 | Statormodul |
| 11 | erstes Statormodul |
| 12 | zweites Statormodul |
| 13 | drittes Statormodul |
| 14 | Statoroberfläche |
| 15 | erste Bewegungsfläche |
| 16 | zweite Bewegungsfläche |
| 17 | erste Ausdehnung |
| 18 | zweite Ausdehnung |
| 19 | Bewegungsrichtung |
| 20 | Läufer |
| 21 | Magneteinheit |
| 22 | Magnetanordnung |
| 22-1 | erste Magnetanordnung |
| 22-2 | zweite Magnetanordnung |
| 22-3 | dritte Magnetanordnung |
| 22-4 | vierte Magnetanordnung |
| 23 | Aufnahme |
| 24 | Unterseite |
| 25 | Räumschild |
| 26 | Tank |
| 27 | Oberseite |
| 30 | Spalt |
| 31 | Spaltbreite |
| 32 | Funktionselement |
| 33 | weiterer Spalt |
| 34 | geschlossener Spalt |
| 40 | Gehäuse |
| 41 | bewegliche Tür |
| 42 | Öffnungsstellung |
| 43 | Schließstellung |
| 44 | Gehäusewandstärke |
| 45 | Vertiefung |
| 46 | Türstärke |
| 47 | Vertiefungsbreite |
| 48 | Gehäuseäußeres |
| 49 | Gehäuseinneres |
| 51 | weitere bewegliche Tür |
| 52 | erstes Gehäuseäußeres |
| 53 | zweites Gehäuseäußeres |
| 60 | Türantrieb |
| 70 | Reinigungsbürste |
| 71 | Borste |
| 73 | Düse |
| 74 | Fluid |
| 75 | Anschlussschlauch |
| 77 | Lichtquelle |
| 78 | Lichtdetektor |
| 80 | Auffangbehälter |
| 81 | Schmutzpartikel |
| 82 | Schlauch |
| 83 | Absaugevorrichtung |
| 85 | Deckel |
| 86 | Stange |
| 87 | Antrieb |
| 88 | Stift |
| 89 | Halteelement |
| 90 | Betankungsvorrichtung |
| 91 | ausfahrbare Düse |
| 93 | Statorsegment |
| 94 | weiteres Statorsegment |
| 95 | Segmentbreite |
| 96 | Leiterstreifen |
| 97 | erste Statorlage |
| 98 | zweite Statorlage |

| | |
|---|---|
| X | erste Antriebsrichtung |
| Y | zweite Antriebsrichtung |
| λ | Magnetisierungsperiodenbreite |

**Patentansprüche**

**1.** Anordnung (2) von Statormodulen (10) für ein Planarantriebssystem (1), umfassend ein erstes Statormodul (11) und ein zweites Statormodul (12), wobei das erste Statormodul (11) und/oder das zweite Statormodul (12) jeweils Statorsegmente (93) mit einer Segmentbreite (95) aufweisen, wobei die Statorsegmente (93) bestrombar ausgestaltet sind, wobei mittels der Statorsegmente (93) ein Magnetfeld zum Wechselwirken mit Magnetanordnungen (22) eines Läufers (20) des Planarantriebssystems (1) zum Antreiben und/oder Halten eines Läufers (20) bereitgestellt werden kann, wobei das erste Statormodul (11) und das zweite Statormodul (12) beabstandet zueinander angeordnet sind und dadurch ein Spalt (30) gebildet ist, wobei der Spalt (30) eine Spaltbreite (31) aufweist, wobei die Spaltbreite (31) kleiner oder gleich der Segmentbreite (95) ist, wobei im Bereich des Spalts (30) mindestens ein Funktionselement (32) angeordnet ist, wobei durch das Funktionselement (32) weitere Funktionen, die über das Bewegen von Läufern (20) hinausgehen, bereitgestellt werden, **gekennzeichnet dadurch, dass**

das Funktionselement (32) eine bewegliche Tür (41) umfasst,
oder
wobei das Funktionselement (32) eine Lichtquelle (77) und einen Lichtdetektor (78) umfasst, wobei mittels der Lichtquelle (77) und des Lichtdetektors (78) eine Erfassung eines beweglichen Läufers (20) und/oder ein Erkennen einer Bewegung eines Gegenstands zwischen der Lichtquelle (77) und dem Lichtdetektor (78) erfolgen kann
oder
wobei das Funktionselement (32) einen Torluftschleier bereitstellt,
oder
wobei das Funktionselement (32) eine Reinigungsbürste (70) aufweist, wobei die Reinigungsbürste (70) feststehend oder drehbar ausgestaltet ist
oder
wobei das Funktionselement (32) eine Düse (73) zum Applizieren eines Fluids (74) umfasst
oder
wobei das Funktionselement (32) ein Desinfektionselement umfasst
oder
wobei das Funktionselement (32) eine Absaugvorrichtung (83) umfasst
oder
wobei das Funktionselement (32) ein Halteelement (89) umfasst.

**2.** Anordnung (2) von Statormodulen (10) nach Anspruch 1, wobei das erste Statormodul (11) beweglich angeordnet ist, wobei das erste Statormodul (11) derart bewegt werden kann, dass die Spaltbreite (31) variabel veränderbar ist.

**3.** Anordnung (2) von Statormodulen (10) nach Anspruch 1 oder 2, wobei das Funktionselement (32) die bewegliche Tür (41) umfasst, wobei die bewegliche Tür (41) eine Schließstellung (43) und eine Öffnungsstellung (42) aufweist, wobei die bewegliche Tür (41) in Schließstellung (43) teilweise innerhalb des Spaltes (30) zwischen dem ersten Statormodul (11) und dem zweiten Statormodul (12) angeordnet ist.

**4.** Anordnung (2) von Statormodulen (10) nach Anspruch 3, wobei mittels der beweglichen Tür (41) ein Gehäuse (40) um zumindest das erste Statormodul (11) geschlossen werden kann, wobei das Gehäuse (40) gasdicht und/oder fluiddicht und/oder partikeldicht ausgeführt ist.

**5.** Anordnung (2) von Statormodulen (10) nach Anspruch 4, wobei das Gehäuse (40) eine weitere bewegliche Tür (51) aufweist, wobei die Anordnung (2) von Statormodulen (10) ein drittes Statormodul (13) umfasst, wobei das dritte Statormodul (13) und das erste Statormodul (11) beabstandet zueinander angeordnet sind und dadurch ein weiterer Spalt (33) gebildet ist, wobei die weitere bewegliche Tür (51) eine Schließstellung (43) und eine Öffnungsstellung (42) aufweist, wobei die weitere bewegliche Tür (51) in Schließstellung (43) teilweise innerhalb des weiteren Spaltes (33) zwischen dem ersten Statormodul (11) und dem dritten Statormodul (13) angeordnet ist.

**6.** Anordnung (2) von Statormodulen (10) nach einem der Ansprüche 1 bis 5, wobei das Funktionselement (32) außerhalb der Statormodule (11, 12) angeordnet ist.

**7.** Anordnung (2) von Statormodulen (10) nach einem der Ansprüche 1 bis 6, wobei mittels Leiterstreifen der Statorsegmente (93) das Magnetfeld zum Wechselwirken mit den Magnetanordnungen (22) des Läufers (20) des Planarantriebssystems (1) zum Halten des Läufers (20) und ein magnetisches Wanderfeld zum Wechselwirken mit Magnetanordnungen (22) des Läufers (20) des Planarantriebssystems (1) zum Antreiben des Läufers (20) bereitgestellt werden kann, wobei das Magnetfeld dazu genutzt werden kann, den Läufer (20) in einer Vertikal-Position zu halten, wobei der Läufer (20) mittels des magnetischen Wanderfelds in horizontaler Richtung bewegt werden kann.

**8.** Planarantriebssystem (1) mit einer Anordnung (2) von Statormodulen (10) umfassend ein erstes Statormodul (11) und ein zweites Statormodul (12), und zumindest einen Läufer (20), wobei der Läufer (20) eine Mehrzahl von in eine Antriebsrichtung (X, Y) des Läufers (20) wirksamen und in der Antriebsrichtung (X, Y) nebeneinander angeordneten Magnetanordnungen (22) zum Antreiben und/oder Halten des Läufers (20) mit jeweils einer Magnetisierungsperiodenbreite ($\lambda$) aufweist, wobei das erste Statormodul (11) und/oder das zweite Statormodul (12) jeweils Statorsegmente (93) mit einer Segmentbreite (95) aufweisen, wobei die Statorsegmente (93) bestrombar ausgestaltet sind, wobei mittels der Statorsegmente (93) ein Magnetfeld zum Wechselwirken mit den Magnetanordnungen (22) des Läufers (20) zum Antreiben und/oder Halten des Läufers (20) des Planarantriebssystems (1) bereitgestellt werden kann, wobei das erste Statormodul (11) und das zweite Statormodul (12) beabstandet zueinander angeordnet sind und dadurch ein Spalt (30) gebildet ist, wobei der Spalt (30) eine Spaltbreite (31) von maximal der Hälfte der Anzahl der in eine Antriebsrichtung (X, Y) des Läufers wirksamen Magnetanordnungen (22) multipliziert mit der Magnetisierungsperiodenbreite ($\lambda$) aufweist, wobei im Bereich des Spalts (30) mindestens ein Funktionselement (32) angeordnet ist, wobei durch das Funktionselement (32) weitere Funktionen, die über das Bewegen von Läufern (20) hinausgehen, bereitgestellt werden **gekennzeichnet dadurch, dass**

das Funktionselement (32) eine bewegliche Tür (41) umfasst,
oder
wobei das Funktionselement (32) eine Lichtquelle (77) und einen Lichtdetektor (78) umfasst, wobei mittels der Lichtquelle (77) und des Lichtdetektors (78) eine Erfassung eines beweglichen Läufers (20) und/oder ein Erkennen einer Bewegung eines Gegenstands zwischen der Lichtquelle (77) und dem Lichtdetektor (78) erfolgen kann
oder
wobei das Funktionselement (32) einen Torluftschleier bereitstellt,
oder
wobei das Funktionselement (32) eine Reinigungsbürste (70) aufweist, wobei die Reinigungsbürste (70) feststehend oder drehbar ausgestaltet ist
oder
wobei das Funktionselement (32) eine Düse (73) zum Applizieren eines Fluids (74) umfasst
oder
wobei das Funktionselement (32) ein Desinfektionselement umfasst
oder
wobei das Funktionselement (32) eine Absaugvorrichtung (83) umfasst
oder
wobei das Funktionselement (32) ein Halteelement (89) umfasst.

**9.** Planarantriebssystem (1) nach Anspruch 8, wobei die Magnetisierungsperiodenbreite ($\lambda$) der Segmentbreite (95) entspricht.

**10.** Planarantriebssystem (1) nach Anspruch 8 oder 9, wobei der Läufer (20) zwei in die Antriebsrichtung (X, Y) des Läufers (20) wirksamen und in der Antriebsrichtung (X, Y) nebeneinander angeordneten Magnetanordnungen (22) aufweist.

## Claims

**1.** An assembly (2) of stator modules (10) for a planar drive system (1), comprising a first stator module (11) and a second stator module (12), the first stator module (11) and/or the second stator module (12) each comprising stator segments (93) with a segment width (95), wherein the stator segments (93) are embodied to be energizable, wherein with the aid of the stator segments (93) a magnetic field may be provided for interacting with magnet arrangements (22) of a rotor (20) of the planar drive system (1) in order to drive and/or hold the rotor (20), wherein the first stator module (11) and the second stator module (12) are arranged at a distance from each other and a gap (30) is formed as a result, wherein the gap (30) comprises a gap width (31), wherein the gap width (31) is smaller than or equal to the segment width (95), wherein at least one functional element is arranged in the region of the gap (30), wherein the functional element (32) provides further functions that go beyond the moving of the rotors (20),

**characterized in that** the functional element (32) comprises a movable door (41),
or
wherein the functional element (32) comprises a light source (77) and a light detector (78), wherein with the aid of the light source (77) and of the light detector (78) a detection of the movable rotor (20) and/or a determination of a movement of an object between the light source (77) and the light detector (78) may be carried out
or
wherein the functional element (32) provides an air curtain,
or
wherein the functional element (32) comprises a cleaning brush (70), wherein the cleaning brush (70) has a stationary or rotatable embodiment
or
wherein the functional element (32) comprises a nozzle (73) for applying a fluid (74)
or
wherein the functional element (32) comprises a disinfecting element
or
wherein the functional element (32) comprises a suction device (83),
or
wherein the functional element (32) comprises a retaining element (89).

**2.** The assembly (2) of stator modules (10) according to claim 1, wherein the first stator module (11) is arranged in a moveable manner, wherein the first stator module (11) may be moved in such a way that the gap width (31) may be variably changed.

**3.** The assembly (2) of stator modules (10) according to claim 1 or 2, wherein the functional element (32) comprises the movable door (41), wherein the movable door (41) has a closed position (43) and an open position (42), wherein in the closed position (43) the movable door (41) is partially arranged within the gap (30) between the first stator module (11) and the second stator module (12).

**4.** The assembly (2) of stator modules (10) according to claim 3, wherein a housing (40) may enclose at least the first stator module (11) with the aid of the movable door (41), wherein the housing (40) is embodied to be gas-tight and/or fluid-tight and/or particle-tight.

**5.** The assembly (2) of stator modules (10) according to claim 4, wherein the housing (40) comprises a further movable door (51), wherein the assembly (2) of stator modules (10) comprises a third stator module (13), wherein the third stator module (13) and the first stator module (11) are arranged at a distance with regard to each other, thereby forming a further gap (33), wherein the further movable door (51) has a closed position (43) and an open position (42), wherein in the closed position (43) the further movable door (51) is arranged partially within the further gap (33) between the first stator module (11) and the third stator module (13).

**6.** The assembly (2) of stator modules (10) according to any one of claims 1 to 5, wherein the functional element (32) is arranged outside of the stator modules (11, 12).

**7.** The assembly of stator modules (10) according to any one of claims 1 to 6, wherein with the aid of conductor strips of the stator segments (93) the magnetic field may be provided for interacting with the magnet arrangements (22) of the rotor (20) of the planar drive system (1) in order to hold the rotor (20) and a magnetic migrating field may be provided for interacting with magnet arrangements (22) of the rotor (20) of the planar drive system (1) in order to drive the rotor (20), wherein the magnetic field may be used to hold the rotor (20) in a vertical position, wherein the rotor (20) may be moved in a horizontal direction with the aid of the magnetic migrating field.

**8.** A planar drive system (1) having an assembly (2) of stator modules (10) comprising a first stator module (11) and a second stator module (12), and at least one rotor (20), wherein the rotor (20) comprises a plurality of magnet arrangements (22) which are effective in a drive direction (X, Y) of the rotor (20) and are arranged next to one another in the drive direction (X, Y) for driving and/or holding the rotor (20), each having a magnetization period width ($\lambda$), the first stator module (11) and/or the second stator module (12) each comprising stator segments (93) having a segment width (95), wherein the stator segments (93) are embodied to be energizable, wherein with the aid of the stator segments (93) a magnetic field may be provided for interacting with the magnet arrangements (22) of the rotor (20) in order to drive and/or hold the rotor (20) of the planar drive system (1), wherein the first stator module (11) and the second stator module (12) are arranged at a distance from each other and a gap (30) is formed as a result, the gap (30) having a gap width (31) of at most half the number of magnet arrangements (22) which are effective in a drive direction (X, Y) of the rotor multiplied by the magnetization period width ($\lambda$), wherein at least one functional element is arranged in the region of the gap (30), wherein the functional element (32) provides further functions that go beyond the moving of the rotors (20),

**characterized in that** the functional element (32) comprises a movable door (41),
or
wherein the functional element (32) comprises a light source (77) and a light detector (78), wherein with the aid of the light source (77) and of the light detector (78) a detection of the movable rotor (20) and/or a determination of a movement of an object between the light source (77) and the light detector (78) may be carried out
or
wherein the functional element (32) provides an air curtain,
or
wherein the functional element (32) comprises a cleaning brush (70), wherein
the cleaning brush (70) has a stationary or rotatable embodiment
or
wherein the functional element (32) comprises a nozzle (73) for applying a fluid (74)
or
wherein the functional element (32) comprises a disinfecting element
or
wherein the functional element (32) comprises a suction device (83),
or
wherein the functional element (32) comprises a retaining element (89).

**9.** The planar drive system (1) according to claim 8, wherein the magnetization period width ($\lambda$) corresponds to the segment width (95).

**10.** The planar drive system (1) according to claim 8 or 9, wherein the rotor (20) comprises two magnet arrangements (22) acting in the drive direction (X, Y) of the rotor (20) and arranged side by side in the drive direction (X, Y).

## Revendications

**1.** Ensemble (2) de modules statoriques (10) destiné à un système d’entraînement planaire (1), ledit ensemble comprenant un premier module statorique (11) et un deuxième module statorique (12), le premier module statorique (11) et/ou le deuxième module statorique (12) comportant chacun des segments statoriques (93) ayant une largeur de segment (95), les segments statoriques (93) étant conçus pour être alimentés en courant, un champ magnétique destiné à interagir avec des ensembles d'aimants (22) d'un rotor (20) du système d'entraînement planaire (1) afin d'entraîner et/ou maintenir un rotor (20) pouvant être fourni au moyen des segments statoriques (93), le premier module statorique (11) et le deuxième module statorique (12) étant disposés à distance l'un de l'autre et un espace (30) étant ainsi ménagé, l'espace (30) ayant une largeur d'espace (31), la largeur d'espace (31) étant inférieure ou égale à la largeur de segment (95), au moins un élément fonctionnel (32) étant disposé dans la région de l'espace (30), l'élément fonctionnel (32) assurant d'autres fonctions qui vont au-delà du déplacement de rotors (20),
**caractérisé en ce que**

l'élément fonctionnel (32) comprend une porte mobile (41),
ou
l'élément fonctionnel (32) comprend une source de lumière (77) et un détecteur de lumière (78), la source de lumière (77) et le détecteur de lumière (78) permettant de détecter un rotor mobile (20) et/ou de percevoir un mouvement d'un objet entre la source de lumière (77) et le détecteur de lumière (78)
ou
l'élément fonctionnel (32) fournit un rideau d'air de porte,
ou
l'élément fonctionnel (32) comporte une brosse de nettoyage (70), la brosse de nettoyage (70) étant conçue pour être immobile ou rotative,
ou
l'élément fonctionnel (32) comprend une buse (73) destinée à appliquer un fluide (74),
ou
l'élément fonctionnel (32) comprend un élément de désinfection
ou
l'élément fonctionnel (32) comprend un dispositif d'aspiration (83)
ou
l'élément fonctionnel (32) comprend un élément de maintien (89).

**2.** Ensemble (2) de modules statoriques (10) selon la revendication 1, le premier module statorique (11) étant disposé de manière mobile, le premier module statorique (11) pouvant être déplacé de manière à ce que la largeur d'espace (31) puisse être modifiée de manière variable.

**3.** Ensemble (2) de modules statoriques (10) selon la revendication 1 ou 2, l'élément fonctionnel (32) comprenant la porte mobile (41), la porte mobile (41) ayant une position fermée (43) et une position ouverte (42), la porte mobile (41) étant disposée partiellement à l'intérieur de l'espace (30) entre le premier module statorique (11) et le deuxième module statorique (12) dans la position fermée (43).

**4.** Ensemble (2) de modules statoriques (10) selon la revendication 3, un boîtier (40) pouvant être fermé autour d'au moins le premier module statorique (11) au moyen de la porte mobile (41), le boîtier (40) étant réalisé de manière étanche aux gaz et/ou étanche aux fluides et/ou étanche aux particules.

**5.** Ensemble (2) de modules statoriques (10) selon la revendication 4, le boîtier (40) comportant une autre porte mobile (51), l'ensemble (2) de modules statoriques (10) comprenant un troisième module statorique (13), le troisième module statorique (13) et le premier module statorique (11) étant disposés à distance l'un de l'autre et un autre espace (33) étant ainsi ménagé, l'autre porte mobile (51) ayant une position fermée (43) et une position ouverte (42), l'autre porte mobile (51) étant disposée partiellement à l'intérieur de l'autre espace (33) entre le premier module statorique (11) et le troisième module statorique (13) dans la position fermée (43).

**6.** Ensemble (2) de modules statoriques (10) selon l'une des revendications 1 à 5, l'élément fonctionnel (32) étant disposé à l'extérieur des modules statoriques (11, 12).

**7.** Ensemble (2) de modules statoriques (10) selon l'une des revendications 1 à 6, le champ magnétique destiné à interagir avec les ensembles d'aimants (22) du rotor (20) du système d'entraînement planaire (1) afin de maintenir le rotor (20) et un champ magnétique progressif destiné à interagir avec des ensembles d'aimants (22) du rotor (20) du système d'entraînement planaire (1) afin d'entraîner le rotor (20) pouvant être fournis au moyen de bandes conductrices des segments statoriques (93), le champ magnétique pouvant être utilisé pour maintenir le rotor (20) dans une position verticale, le rotor (20) pouvant être déplacé dans une direction horizontale au moyen du champ magnétique progressif.

**8.** Système d'entraînement planaire (1) comprenant un ensemble (2) de modules statoriques (10) comprenant un premier module statorique (11) et un deuxième module statorique (12), et au moins un rotor (20), le rotor (20) comportant une pluralité d'ensembles d'aimants (22) qui agissent dans une direction d'entraînement (X, Y) du rotor (20), qui sont disposés les uns à côté des autres dans la direction d'entraînement (X, Y) et qui sont destinés à entraîner et/ou maintenant le rotor (20), chacun ayant une largeur de période de magnétisation ($\lambda$), le premier module

statorique (11) et/ou le deuxième module statorique (12) comportant chacun des segments statoriques (93) ayant une largeur de segment (95), les segments statoriques (93) étant conçus pour être alimentés en courant, un champ magnétique destiné à interagir avec les ensembles d'aimants (22) du rotor (20) afin d'entraîner et/ou de maintenir le rotor (20) du système d'entraînement planaire (1) pouvant être fourni au moyen des segments statoriques (93),

le premier module statorique (11) et le deuxième module statorique (12) étant disposés à distance l'un de l'autre et un espace (30) étant ainsi ménagé, l'espace (30) ayant une largeur d'espace (31) au plus égale à la moitié du nombre d'ensembles d'aimants (22), qui agissent dans une direction d'entraînement (X, Y) du rotor, multipliée par la largeur de période de magnétisation (λ), au moins un élément fonctionnel (32) étant disposé dans la région de l'espace (30), l'élément fonctionnel (32) fournissant d'autres fonctions qui vont au-delà du mouvement de rotors (20), **caractérisé en ce que**
l'élément fonctionnel (32) comprend une porte mobile (41),
ou
l'élément fonctionnel (32) comprend une source de lumière (77) et un détecteur de lumière (78), la source de lumière (77) et le détecteur de lumière (78) permettant de détecter un rotor mobile (20) et/ou de percevoir un mouvement d'un objet entre la source de lumière (77) et le détecteur de lumière (78)
ou
l'élément fonctionnel (32) fournit un rideau d'air de porte,
ou
l'élément fonctionnel (32) comporte une brosse de nettoyage (70), la brosse de nettoyage (70) étant conçue pour être immobile ou rotative,
ou
l'élément fonctionnel (32) comprend une buse (73) destinée à appliquer un fluide (74),
ou
l'élément fonctionnel (32) comprend un élément de désinfection
ou
l'élément fonctionnel (32) comprend un dispositif d'aspiration (83)
ou
l'élément fonctionnel (32) comprend un élément de maintien (89).

**9.** Système d'entraînement planaire (1) selon la revendication 8, la largeur de période de magnétisation (λ) correspondant à la largeur de segment (95).

**10.** Système d'entraînement planaire (1) selon la revendication 8 ou 9, le rotor (20) comportant deux ensembles d'aimants (22) qui agissent dans la direction d'entraînement (X, Y) du rotor (20) et qui sont disposés l'un à côté de l'autre dans la direction d'entraînement (X, Y).

1
2
10
14
10
14
3
10
14
11
30
20
15
10
12
4
10
31
16
10
14
17
18

Fig. 1

Y
X
20
23
21,22
22-2
21,22
22-4
21,22
22-3
21,22
22-1
λ
λ
λ
λ

Fig. 2

2
95
96
93
97
98
22-4
λ
20
λ
22-3
31
X
93
94
10
11
30
14
10
12
97
98

Fig. 3

2
14
20
12
32
41
42
30
44
46
47
31
45
11
14
40

Fig. 4

2
48
14
12
41
43
45
20
11
49
14
40
Fig. 5

2
52
30
32
41
43
12
45
20
11
49
40
45
51
42
32
33
13
53

Fig. 6

2
48
14
20
12
41
42
32
60
14
30
11
40
49

Fig. 7

2
14
12
41
43
60
20
11
40
49

Fig. 8

2

14
10
20
11
32
41
42
60
30
14
12
10

**Fig. 9**

2

41
43
11
60
12
20

Fig. 10

2
14
24
11
20
71
71
71
32
70
30
12
14

Fig. 11

2
24
11
20
30
73
74
32
75
12

Fig. 12

2
24
20
30
77
32
11
12
78
32
77

Fig. 13

2
14
10
13
20
25
14
10
11
20
25
81
80
30
32
10
1
14
12

Fig. 14

2
10
13
20
25
10
11
20
25
80
81
83
82
32
12
10

Fig. 15

2
14
20
11
32
86
32
87
85
30
12
14

Fig. 16

2
14
11
20
85
86
88
30
89
87
32
12
14

Fig. 17

2
14
11
20
85
86
88
23
87
32
89
30
12
14

**Fig. 18**

2
20
88
23
85
86
87
30
89
11
12

Fig. 19

2
11
12
20
24
26
27
30
32
90
91

Fig. 20

2
2
34
30
12
12
31
30
20
11
19
20
11
19

Fig. 21

2
20
25
20
25
81
34
13
12
11
80
82
83
19
2
20
25
20
30
13
12
11
80
82
83
19

Fig. 22

2
2
2
20
13
13
13
33, 34
33, 34
33
11
11
11
19
19
19
20
20
20
30
30
30, 34
12
12
12

Fig. 23

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102019117431
- DE 102019118635
- DE 102017131304 A1
- DE 102007038845 A1
- EP 2779390 A2
- WO 2013059934 A1
- DE 102017131304
- DE 102017131324 A1